# EUROPEAN PATENT SPECIFICATION

(11) **EP 4 078 708 B1**
(45) Date of publication and mention of the grant of the patent: **06.12.2023**
(21) Application number: 19835418.5
(22) Date of filing: 20.12.2019
(51) Int. Cl.: H01M 8/18, H01M 10/056

(54) **QUASI-SOLID ZINC-IRON REDOX BATTERY**
QUASIFESTE ZINK-EISEN-REDOX-BATTERIE
BATTERIE À OXYDORÉDUCTION ZINC-FER QUASI SOLIDE

(43) Date of publication of application: 26.10.2022
(73) Proprietor: GENERBOX S.R.L., 22100 Como (IT)
(72) Inventor: ACCOGLI, Alessandra, 73030 DISO (IT); BERTOLI, Luca, 25125 BRESCIA (IT); MAGAGNIN, Luca, 20017 RHO (IT)
(74) Representative: Palladino, Saverio Massimo
(86) International application number: PCT/EP2019/086865
(87) International publication number: WO 2021/121641

(56) References cited:
- WO-A1-2018/217274
- WO-A2-00/51198
- JP-A- S5 578 475

## Description

### FIELD OF THE INVENTION

The present invention relates to a rechargeable battery based on quasi-solid electrolytes, which avoids the use of toxic or environmentally harmful chemicals.

### STATE OF THE ART

The development of affordable and efficient energy storage devices is becoming a priority for all energy fields like portable electronics, stationary grid storage and electric vehicles. Rechargeable batteries market is in continuous expansion and great efforts are dedicated to the improvement of the actual systems or to the discovery of new solutions.

A battery, typically defined as an energy accumulator capable to provide electric current to a given load, consists mainly of four components: (i) the anode, or negative electrode, which gives up electrons to the external circuit and is oxidized during the electrochemical reaction; (ii) the cathode, or positive electrode, which accept electrons from the external circuit and it is reduced during the electrochemical reaction; (iii) the electrolyte, or ionic conductor, which provides the medium for transfer of ionic charge, i.e. ions inside the cell to the anode or to the cathode; and (iv) a membrane or separator acting as physical barrier in between the electrodes, necessary to prevent physical contact of the two electrodes and to guarantee ionic flow while blocking electrons. Two different types of batteries exist: primary batteries, which cannot be charged and thus are simply disposed of when the reactants are exhausted; and secondary batteries, capable of being charged and consequently discharged multiple times. In this view, the latter possess the ideal characteristics in automotive, grid storage and portable electronic applications.

The main issue of secondary battery technologies for portable applications is the presence of a liquid electrolyte, typically characterized by a high ionic conductivity with the intrinsic possibility of leakages and hazards. Solid or quasi-solid electrolytes have therefore been proposed and studied in the form of polymeric membranes and gels as a safer alternative. Solid electrolyte batteries are typically characterized by extremely long operational survivability, shelf life and temperature range of operation.

The purposes of the quasi-solid electrolytes in electrochemical applications are to provide electronic insulation and to allow a fast and selective transport of the desired ions. Moreover, they have other properties such as high salt solubility, low glass transition temperature (T_{g}), large electrochemical stability windows, low degree of crystallinity, mechanical stability and low temperature sensitivity.

When quasi-solid electrolytes are considered, two main types of polymer electrolytes can be distinguished and adopted for application in secondary batteries: solid polymer electrolytes (SPEs) and gel polymer electrolytes (GPEs), also called microporous polymer electrolytes. SPEs consist of a polymeric matrix containing dissolved salts; they are ion-conducting single-phase systems based on polymer-salt complexes without any liquid component. Among them, plasticized polymer electrolytes (PPEs) and composite polymer electrolytes (CPEs) can be included. In contrast, GPEs are formed by swelling a polymer matrix in an electrolyte solution containing the desired solvents, plasticizers and ions. The main difference between these two classes of polymers is the ions transportation mechanism, small molecule solvated vehicular transport in GPEs and polymer associated transport modes in SPEs. So, in a GPE, the ion transport is mainly related to the solvent or plasticizer rather than to the polymer matrix.

It is an object of the present invention to provide a rechargeable redox battery that avoids the use of toxic or environmentally potentially harmful chemicals, and is based on quasi-solid electrolytes.

### SUMMARY OF THE INVENTION

This and other objects are achieved with the present invention, which relates to a Zn-Fe quasi-solid redox battery (QSRB) making use of low cost and earth abundant materials as reactive species.

In particular, the present invention provides a Zn-Fe QSRB comprising:
- a first half-cell comprising: a first quasi-solid electrolyte selected from a first quasi-solid electrolyte in which are dissolved Zn²⁺ ions and a first quasi-solid electrolyte in which are dispersed organic and/or inorganic electroactive particles containing zinc ions in different oxidation states; a current collector; and an electrode disposed within the first half-cell;
- a second half-cell comprising: a second quasi-solid electrolyte selected from a second quasi-solid electrolyte in which are dissolved Fe²⁺ and Fe³⁺ ions and a second quasi-solid electrolyte in which are dispersed organic and/or inorganic electroactive particles containing Fe²⁺ and Fe³⁺ ions; a current collector; and an electrode disposed within the second half-cell; and
- a separator between the two half-cells,
wherein said first and second quasi-solid electrolytes are, independently from each other, in the form of a plasticized polymer electrolyte (PPE) or of a composite polymer electrolyte (CPE).

In the two half-cells oxidation and reduction reactions occur to charge and discharge the battery. These reactions generally occur at the interface between the quasi-solid electrolyte and the electrode of each half-cell. Some electroactive particles, capable to change their oxidation state if a current (or a voltage) is applied, can also be included into the two quasi-solid electrolytes. Several additives can be preferentially included in either or both the quasi-solid electrolytes. In particular, the first electrolyte may comprise a hydrogen evolution-suppressing agent, a complexing agent, a plasticizer and/or a buffering agent; or, the second electrolyte may comprise a complexing agent, a plasticizer and/or a buffering agent. In case of dispersed electrodes, thickener additives may also be comprised.

The electrodes in the two half-cells may be solid, e.g. metallic or porous carbon electrodes; the electrode of the first half-cell may be realized in form of a slurry of conductive particles, preferably carbon particles and/or zinc particles. Alternatively, electrolytes may contain the electrode in form of a percolated slurry of conductive particles where oxido-reduction (redox) reactions can take place. In this last scenario the active area to geometrical area ratio is drastically increased, so that much more electrons can be exchanged through the redox reactions at the same time without increasing the dimensions of the device; this explains the possibility of using the present invention in high power applications.

The QSRB including materials like iron and zinc has the main advantages of low cost, low toxicity and higher safety with respect to Li-ion batteries.

### DESCRIPTION OF THE FIGURES

The invention will be described in detail in the following with reference to the Figures, in which:
- Figure 1 shows a schematic representation of a quasi-solid redox battery according to the present invention;
- Figure 2 shows a schematic representation of a quasi-solid redox battery according to the present invention;
- Figure 3 shows a schematic representation of a quasi-solid redox battery according to the present invention;
- Figure 4 shows a schematic representation of a quasi-solid redox battery according to the present invention;
- Figure 5 shows a schematic representation of a quasi-solid redox battery according to the present invention;
- Figure 6 shows a schematic representation of a quasi-solid redox battery according to the present invention;
- Figure 7 shows a schematic representation of a quasi-solid redox battery according to the present invention;
- Figure 8 shows a schematic representation of a quasi-solid redox battery according to the present invention;
- Figure 9 shows a graph of a cyclic voltammetry for a Zn-based QSA prepared according to the Example 1;
- Figure 10 shows a graph of a cyclic voltammetry for a Zn-based QSA prepared according to the Example 4;
- Figure 11 shows a graph of a cyclic voltammetry for a Fe-based QSC prepared according to the Example 9;
- Figure 12 shows a graph of a cyclic voltammetry for a Fe-based QSC prepared according to the Example 10;
- Figure 13 shows a graph of the electrochemical impedance spectroscopy (EIS) for a quasi-solid proton conductive membrane prepared according to Example 15;
- Figure 14 shows X-ray diffraction data of the quasi-solid proton conductive membrane prepared according to the Example 17;
- Figure 15 shows a graph of the electrochemical impedance spectroscopy (EIS) for a quasi-solid proton conductive membrane prepared according to Example 18;
- Figure 16 shows charge and discharge cycles for Zn-Fe QSRB according to the present invention assembled according to the Example 27 and tested according to Example 35;
- Figure 17 represents the efficiency vs number of cycles for Zn-Fe QSRB of the present invention assembled according to the Example 27 and tested according to Example 35;
- Figure 18 shows charge and discharge cycles for Zn-Fe QSRB according to the present invention assembled according to the Example 30 and tested according to Example 36;
- Figure 19 shows charge and discharge cycles for Zn-Fe QSRB according to the present invention assembled according to the Example 32 and tested according to Example 37.

### DETAILED DESCRIPTION OF THE INVENTION

A quasi-solid redox battery works as an energy source when it operates in discharge mode, while it acts as an energy storage device when it operates in charge (recharge) mode.

In the Zinc-Iron QSRB of the present invention, the two different half-cells reactions involved during charge and discharge phase are:
*1. Charge phase:*

| | |
|---|---|
| Zn²⁺ + 2 e⁻ → Zn⁰ | Negative electrode, cathode, reduction |
| 2 Fe²⁺ → 2 Fe³⁺ + 2 e⁻ | Positive electrode, anode, oxidation |

*2. Discharge phase:*

| | |
|---|---|
| Zn⁰ → Zn²⁺ + 2 e⁻ | Negative electrode, anode, oxidation |
| 2 Fe³⁺ + 2 e⁻ → 2 Fe²⁺ | Positive electrode, cathode, reduction |

In other words, during the charging phase zinc is electroplated onto the negative electrode, while Fe²⁺ is oxidized to Fe³⁺ at the positive electrode; during the discharge phase the reverse reactions occur, i.e. zinc is oxidized and Fe³⁺ reduced.

In the present invention, the quasi-solid electrolyte containing the zinc ions, reacting at the negative electrode, will be defined quasi-solid anolyte (QSA), while the quasi-solid electrolyte containing the ferric and ferrous ions, reacting at the positive electrode, will be defined quasi-solid catholyte (QSC).

### The Zn-based quasi-solid electrolyte - Quasi-solid anolyte (QSA)

The first quasi-solid electrolyte (QSA) of the invention is a SPE, and may be a PPE or a CPE.

In a first embodiment thereof, the quasi-solid electrolyte (or QSA) of the invention is a plasticized polymer electrolyte (PPE) containing Zn²⁺ ions. This QSA may be prepared by:
(i) mixing:
   (i.a) a solvent;
   (i.b) powders of one or more polymeric material(s) in an amount comprised in the range from 0.1% by weight to 50% by weight, preferably from 5% by weight to 40% by weight, still more preferably from 5% by weight to 30% by weight with respect to the QSA; and
   (i.c) one or more zinc salt(s) soluble in the solvent, in such an amount to have a concentration of Zn²⁺ ions between 0.001 M and 10 M, preferably from 0.1 M to 5 M, still more preferably from 0.3 M to 2 M;
(ii) heating the solvent up to a temperature higher than the glass-transition temperature (T_{g}) of the polymer(s) employed; and,
(iii) after dissolution of the polymer(s) and zinc salt(s), causing the gelation of the obtained mixture.

In a second embodiment thereof, the QSA is a composite polymer electrolyte (CPE) with electroactive particles containing zinc. This quasi-solid electrolyte may be prepared by:
(iv) dissolving powders of one or more polymeric material(s), in an amount comprised in the range from 0.1 % by weight to 50% by weight, preferably from 5% by weight to 40% by weight, still more preferably from 5% by weight to 30% by weight, in a solvent heated up to a temperature higher than the glass-transition temperature (T_{g}) of the polymer(s) employed;
(v) dispersing in the solution thus obtained organic and/or inorganic electroactive particles containing zinc ions in different oxidation states, said particles having size in the range from 10 nm to 1000 µm, preferably from 20 nm to 500 µm, more preferably from 20 nm to 200 µm, still more preferably from 20 nm to 100 µm, and in an amount in the range from 0.01% by weight to 50% by weight, preferably from 1% by weight to 30% by weight, still more preferably from 5% by weight to 20% by weight; and
(vi) after dissolution of the polymer(s) and addition of the zinc electroactive particles, causing gelation of the obtained mixture.

In both the first and second embodiments of the QSA described above, the preferred solvents for use in the invention are ethylene glycol, dimethyl sulfoxide (DMSO), N-methyl-pyrrolidone (NMP), tetrahydrofuran (THF), acetonitrile, water or mixtures thereof; especially preferred solvents are ethylene glycol or mixtures water-ethylene glycol, water-DMSO and ethylene glycol-DMSO.

Preferred polymers for use in both embodiments above are polyvinyl alcohol (PVA), poly(N-vinylpyrrolidone) (PVP), dextran (Dex), gelatin, starch, hydroxyethyl starch (HES), polyethylene oxide (PEO), chitosan, polyacrylic acid (PAA), gelatine, carboxymethyl cellulose (CMC), agar agar, poly(methyl methacrylate) (PMMA), lignin, sodium alginate, poly(vinylidene fluoride-co-hexafluoropropylene) (P(VdF-co-HFP)) and mixtures thereof.

Preferred zinc salts for use in the first embodiment described above are zinc chloride (ZnCl₂), zinc sulfate (ZnSO₄), zinc sulfamate (Zn(SO₃NH₂)₂), zinc acetate (Zn(CH₃COO)₂), zinc carbonate (ZnCOs) and mixtures thereof.

Organic or inorganic electroactive particles containing zinc ions for use in the second embodiment above contain zinc in different oxidation states that can be subjected to redox reaction. The redox reaction can be led by a change in the coordination number of the ion either in the crystalline lattice of the electroactive particle or at the interface between the electroactive particle and the current collector.

A preferred QSA of the PPE kind according to the invention is obtained by dissolving polyvinyl alcohol (PVA), in a concentration ranging from 3% by weight to 20% by weight, in a mixture of DMSO and water with a ratio ranging from 0.1 to 1 as solvent.

The gelation of both the PPE and CPE described above can be obtained via several routes, such as evaporation of the excess of the solvent at temperatures lower than the melting temperature of used polymer(s), cooling ramps, freeze-thaw and/or by chemical crosslinking. In a preferred embodiment, the gelation mechanism selected for the preparation of the QSA is the application of a cooling ramp ranging from 10 °C/min to 300 °C/min, preferably from 50 °C/min to 200 °C/min, still more preferably from 100 °C/min to 150 °C/min.

Both embodiments described above (PPE and CPE) may have a controlled pH value. Acidic or alkaline QSAs can be obtained by mixing the solid polymer electrolytes (both in form of PPE and CPE, previously described) containing the polymeric material(s) and metallic salt(s) directly with an alkaline or acidic solution or by swelling it in an alkaline or acidic solution.

Preferred acids to be added to the QSAs are sulfuric acid, phosphoric acid, phosphorous acid, hydrochloric acid, oxalic acid, acetic acid, sulfamate acid, formic acid, perchloric acid, carbonic acid, methane sulfonic acid, or a combination of two or more thereof, in a concentration ranging from 0.1 M to 2 M, in order to have a pH of the first quasi-solid electrolyte from about 0.1 to about 6, preferably from 0.3 to 5, more preferably from 0.5 to 4. In a preferred embodiment, sulfuric acid is selected in an amount comprised in the range from 0.5 M to 1.5 M.

Preferred bases to be added to the QSAs are potassium hydroxide, sodium hydroxide, boron hydroxide, ammonium hydroxide or a combination of two or more thereof in a concentration ranging from 0.1 M to 10 M, in order to have a pH of the first quasi-solid electrolyte from about 6 to about 14, preferably from 7 to 14, more preferably from 10 to 14. In a preferred embodiment, KOH is selected in an amount comprised in the range from 0.1 M to 7 M.

The QSA may further contain additives for stabilizing the operation of the half-cell and increasing the battery performances, as detailed below.

A first possible additive is a hydrogen evolution suppressor. This component is added in order to increase the battery coulombic efficiency and to reduce side reaction during the charging phase; this additive is also effective in avoiding pH variation of the electrolyte. The hydrogen evolution suppressor may be selected among Pb, Bi, Mn, W, Cd, As, Sb, Sn and their oxides, boric acid or a combination thereof, in an overall concentration in the range between 0.001 M to 5 M, preferably from 0.01 M to 2 M, still more preferably from 0.05 M to 1 M.

Another possible additive for the QSA is a buffering agent, which is added in order to increase the battery efficiency and to avoid pH variations inducing efficiency losses. This component may be selected from the group consisting of citrate salts, ammonium-based salts, phosphate salts or combinations thereof. The concentration of such buffering agent(s) is in the range of 0.001 M to 10 M, preferably from 0.1 M to 5 M, preferably from 0.5 M to 2 M. Preferred is the use of a citrate buffer to keep the pH at around the desired operation range.

Another possible additive is a levelling agent, reducing the dendritic growth of electrodeposited zinc, which would affect the long-time performances of the battery. Levelling agents include, e.g., polyethylene glycol (PEG), polyethylenimine (PEI), quaternary ammonium salts, dextrins, cyclodextrins, sucrose, polytetrafluoroethylene (PTFE), glucose, caffeine and cellulose or combinations thereof, whose concentration is between 0.0001 ppm to 10000 ppm, preferably from 0.002 ppm to 5000 ppm, still more preferably from 1 ppm to 1000 ppm. In a preferred embodiment, the Zn-based electrolyte contains PEI from 0.01 ppm to 5000 ppm, preferably from 1 ppm to 2000 ppm, more preferably from 5 ppm to 1000 ppm.

Another class of additives is represented by metallic salts, which are added in order to support the quasi-solid electrolyte conductivity. Example of salts added to this end are AlCl₃, Al₂(SO₄)₃, MgCl₂, MgSO₄, NaCl, Na₂SO₄, LiCl, Li₂SO₄, KCl, NH₄Cl or combinations thereof. In a preferred embodiment, the concentration of these additives is in a range between 0.001 M and 5 M, preferably from 0.1 M to 2 M, still more preferably from 0.5 M to 1 M. These salts are selected in order to achieve a conductivity value ranging from 10⁻⁵ mS/cm to 10 mS/cm, preferably from 10⁻³ mS/cm to 10 mS/cm, still more preferably from 10⁻¹ mS/cm to 10 mS/cm.

The QSA may further contain Rochelle salts in a concentration between 0.001 M and 10 M, preferably from 0.1 M to 5 M, preferably from 0.5 M to 2 M; these salt act complexing zinc ions and increasing the conductivity of the electrolyte.

Other additives that can be added in the QSA are emulsifiers and fillers, necessary to guarantee the better particles dispersion into the quasi-solid electrolyte in case of dispersed particles. The amount of these organic additives is comprised in a range between 0.0001% by weight to 10% by weight of the mixture, preferably from 0.1% by weight to 5% by weight, still more preferably from 0.1% by weight to 1% by weight. In a preferred embodiment, the zinc-based quasi-solid electrolyte contains organic additives including but not limited to xanthan gum, arabic gum, guar gum, alginate, gellan gum, xyloglucan.

Other possible additives are the plasticizers. These may comprise, for instance, polyols such as polyethylene glycol (PEG), ethylene glycol, diethylene glycol (DEG), tetraethylene glycol (TEG), propylene glycol (PG), glycerol, monosaccharides (glucose, mannose, fructose, sucrose), mannitol, sorbitol and xylitol; other possible plasticizers are urea, fatty acids (e.g., oleic acid), ethanolamine, triethanolamine, vegetable oils, lecithin, waxes, amino acids and surfactants. in a range between 0.1% by weight and 5% by weight, more preferably between 0.3% by weight and 3% by weight, still more preferably between 0.5% by weight and 1% by weight.

In order to increase the amorphous to crystalline ratio and consequently the ionic conductivity, the QSA can contain some organic and inorganic particles comprising but not limited to polymeric particles and ceramic fillers particles. The average size of these particles ranges from 10 nm to 1000 µm, preferably from 20 nm to 500 µm, more preferably from 20 nm to 200 µm, still more preferably from 20 nm to 100 µm in an overall concentration in the range from 0.01% by weight to 20% by weight, more preferably from 0.1% by weight to 10% by weight, still more preferably from 0.1% by weight to 5% by weight.

The first quasi-solid electrolyte works in a temperature range between 20 °C and 70 °C, preferably from 20 °C to 50 °C, more preferably at room temperature.

The inventors have observed that the Zn-based quasi-solid electrolyte of the invention (QSA) has a cathodic efficiency higher than 70%, generally higher than 80%, and may reach an efficiency as high as 95%.

### The Fe-based quasi-solid electrolyte - Quasi-solid catholyte (QSC)

The quasi-solid catholyte (QSC) of the invention is a (SPE), and also in this case it may be a PPE or a CPE.

In a first embodiment thereof, the QSC contains Fe²⁺ and Fe³⁺ ions, prepared by:
(vii) mixing:
   (vii.a) a solvent;
   (vii.b) powders of one or more polymeric material(s) in an amount in the range from 0.1% by weight to 50% by weight, preferably from 5% by weight to 40% by weight, more preferably from 5% by weight to 30% by weight with respect to the QSC; and
   (vii.c) a mixture of one or more ferrous (Fe²⁺) salts and one or more ferric (Fe³⁺) salts soluble in the solvent, in such an amount to obtain a concentration of Fe²⁺ ions in the range from 0.001 M to 10 M and/or Fe³⁺ ions concentration in the range of 0.01 M to 10 M;
(viii) heating the solvent up to a temperature higher than the glass-transition temperature (T_{g}) of the polymer(s) employed; and,
(ix) after dissolution of the polymer(s) and iron salt(s), causing the gelation of the obtained mixture.

In a second embodiment thereof, the QSC is a composite polymer electrolyte (CPE) with electroactive particles containing Fe²⁺ and Fe³⁺ ions. This quasi-solid electrolyte may be prepared by:
(x) dissolving powders of one or more polymeric material(s), in an amount comprised in the range from 0.1% by weight to 50% by weight, preferably from 5% by weight to 40% by weight, still more preferably from 5% by weight to 30% by weight, in a solvent heated up to a temperature higher than the glass-transition temperature (T_{g}) of the polymer(s) employed;
(xi) dispersing in the solution thus obtained organic and/or inorganic electroactive particles containing Fe²⁺ and Fe³⁺ ions, said particles having size in the range from 10 nm to 1000 µm, preferably from 20 nm to 500 µm, more preferably from 20 nm to 200 µm, still more preferably from 20 nm to 100 µm, and in an amount in the range from 0.01% by weight to 70% by weight, preferably from 1% by weight to 30% by weight, still more preferably from 2.5% by weight to 15% by weight; and
(xii) after dissolution of the polymer(s) and addition of the iron electroactive particles, causing gelation of the obtained mixture.

In both the first and second embodiments of the QSC described above, the preferred solvents for use in the invention are ethylene glycol, dimethyl sulfoxide (DMSO), N-methyl-pyrrolidone (NMP), tetrahydrofuran (THF), acetonitrile, water or mixtures thereof; especially preferred solvents are ethylene glycol or mixtures water-ethylene glycol, water-DMSO and ethylene glycol-DMSO.

Preferred polymers for use in both embodiments above are polyvinyl alcohol (PVA), poly(N-vinylpyrrolidone) (PVP), dextran (Dex), gelatin, starch, hydroxyethyl starch (HES), polyethylene oxide (PEO), chitosan, polyacrylic acid (PAA), gelatine, carboxymethyl cellulose (CMC), agar agar, poly(methyl methacrylate) (PMMA), lignin, sodium alginate, poly(vinylidene fluoride-co-hexafluoropropylene) (P(VdF-co-HFP)) and mixtures thereof.

Preferred iron salts for producing the QSC of the invention according to the first embodiment above (PPE) are iron chlorides, iron sulfates, iron sulfamates, iron acetates, iron nitrates and iron carbonates. In a preferred embodiment, the source of iron ions are the salts FeCl₂ and FeCl₃ (possibly in their hydrated forms), in a concentration comprised between 0.01 M and 10 M for each metallic ion concentration, preferably from 0.1 M to 4 M, still more preferably from 0.5 M to 2 M.

In one preferred embodiment, the QSC is made of polyvinyl alcohol (PVA), in a concentration ranging from 3% by weight to 15% by weight, dissolved in a mixture of DMSO and water with a ratio ranging from 0.1 to 1 as solvent.

In another preferred embodiment, the QSC is made of PVA, in a concentration ranging from 5% by weight to 20% by weight, dissolved in a mixture of ethylene glycol and water with a ratio ranging from 0.1 to 1 as solvent.

The quasi-solid catholyte is obtained by gelation of the obtained mixing following different routes like evaporation of the excess of the solvent at temperatures lower than the melting temperature of used polymer(s), freeze-thaw, cooling ramps and/or by chemical crosslinking. In a preferred embodiment, the gelation mechanism selected for the preparation of the QSC is the freeze-thaw mechanism. The freeze-thaw gelation process is a multistep process. The first step consists in freezing the SPE to a temperature in the range of -30 °C to 5 °C, preferably from -20 °C to 0 °C, still more preferably from -10 °C to -5 °C. The freezing time is selected in between 0.1 h to 12 h, preferably from 1 h to 7 h, still more preferably from 3 h to 5 h. During the second step the SPE is subject to a thaw treatment at room temperature. The thawing time is selected in between 0.1 h to 5 h, preferably from 0.3 h to 3 h, still more preferably from 0.5 h to 1 h. As a final step, the SPE is subject to a thaw treatment at room temperature. The cycle is repeated from 1 to 10 times, preferably from 2 to 8 times, still more preferably from 3 to 5 times.

Both embodiments described above (PPE and CPE) may have a controlled pH value. Acidic or alkaline QSCs can be obtained by mixing the solid polymer electrolytes (both in form of PPE and CPE, previously described) containing the polymeric material(s) and metallic salt(s) directly with an alkaline or acidic solution or by swelling it in an alkaline or acidic solution.

Preferred acids to be added to the QSCs are sulfuric acid, phosphoric acid, phosphorous acid, hydrochloric acid, oxalic acid, acetic acid, sulfamate acid, formic acid, perchloric acid, carbonic acid, methane sulfonic acid, or a combination of two or more thereof, in a concentration ranging from 0.1 M to 2 M, in order to have a pH of the QSC from about 0.1 to about 6, preferably from 0.3 to 4, more preferably from 0.5 to 2. In a preferred embodiment, hydrochloric acid is selected in an amount comprised in the range from 0.5 M to 1.5 M.

Preferred bases to be added to the QSCs are potassium hydroxide, sodium hydroxide, boron hydroxide, ammonium hydroxide or a combination of two or more thereof in a concentration ranging from 0.1 M to 10 M, in order to have a pH of the QSC from about 6 to about 14, preferably from 7 to 14, more preferably from 10 to 14. In a preferred embodiment, KOH is selected in an amount comprised in the range from 0.1 M to 7 M.

The QSC may contain additives like complexing agents, plasticizers and/or buffering agents. In case of dispersed electrodes, thickener additives may also be comprised.

A first kind of possible additives are compounds acting as complexing agents for the Fe²⁺ and Fe³⁺ ions; these agents also cause an increase of pH, and are selected preferably among soluble citrate salts, tartaric salts, ammonium-based salts, oxalic salts and EDTA, in a concentration between 0.001 M to 10 M, preferably from about 0.1 M to about 2 M. Preferred is the use of citrate salts in a range between 0.001 M to 5 M, preferably from 0.1 M to 1 M, still more preferably from 0.1 M to 0.5 M. The addition of this complexing agent also cooperates to maintain the pH of the quasi-solid electrolyte in the range mentioned above.

Another class of possible additives of the second quasi-solid electrolyte is represented by stabilizing agents necessary for the stabilization of iron metallic ions and the prevention the formation of iron hydroxide affecting the battery performances. Examples of stabilizing additives are ammonium salts, oxalates, acetates, tartrates, ascorbic acid, ethylene glycol and dimethyl sulfoxide (DMSO), in a range between 0.001 M and 10 M, preferably from about 0.1 M to about 2 M.

Example of salts added to this end are AlCl₃, Al₂(SO₄)₃, MgCl₂, MgSO₄, NaCl, Na₂SO₄, LiCl, Li₂SO₄, KCl, NH₄Cl or combinations thereof. In a preferred embodiment, the concentration of these additives is in a range between 0.001 M and 5 M, preferably from 0.1 M to 2 M, still more preferably from 0.5 M to 1 M. These salts are selected in order to achieve a conductivity value ranging from 10⁻⁵ mS/cm to 10 mS/cm, preferably from 10⁻³ mS/cm to 10 mS/cm, still more preferably from 10⁻¹ mS/cm to 10 mS/cm.

Another class of possible additives are emulsifiers and fillers, necessary to guarantee a better dispersion of electroactive particles. The amount of these organic additives is comprised in a range between 0.0001% by weight to 10% by weight of the mixture, preferably from 0.1% by weight to 5% by weight, still more preferably from 0.1% by weight to 1% by weight. In a preferred embodiment, the iron-based quasi-solid electrolyte contains organic additives including but not limited to xanthan gum and arabic gum, guar gum, alginate, gellan gum, xyloglucan.

Other possible additives are the plasticizers. These may comprise, for instance, polyols such as polyethylene glycol (PEG), ethylene glycol, diethylene glycol (DEG), tetraethylene glycol (TEG), propylene glycol (PG), glycerol, monosaccharides (glucose, mannose, fructose, sucrose), mannitol, sorbitol and xylitol; other possible plasticizers are urea, fatty acids (e.g., oleic acid), ethanolamine, triethanolamine, vegetable oils, lecithin, waxes, amino acids and surfactants. in a range between 0.1% by weight and 5% by weight, more preferably between 0.3% by weight and 3% by weight, still more preferably between 0.5% by weight and 1% by weight.

In order to increase the amorphous to crystalline ratio and consequently the ionic conductivity, the QSC can contain some organic and inorganic particles comprising but not limited to polymeric particles and ceramic fillers particles. The average size of these particles ranges from 10 nm to 1000 µm, preferably from 20 nm to 500 µm, more preferably from 20 nm to 200 µm, still more preferably from 20 nm to 100 µm in an overall Concentration in the range from 0.01% by weight to 20% by weight, more preferably from 0.1% by weight to 10% by weight, still more preferably from 0.1% by weight to 5% by weight.

The QSC works in a temperature range between 20 °C and 70 °C, preferably from 20 °C to 50 °C, more preferably at room temperature.

The inventors have observed that the Fe-based quasi-solid electrolyte of the invention (QSA) has a cathodic efficiency higher than 70%, generally higher than 80%, and may reach an efficiency as high as 100%.

### The quasi-solid proton conductive membrane

The quasi-solid proton conductive membrane is a necessary part of the QSRB and it is necessary to prevent physical contact between the two quasi-solid electrolytes avoiding short circuits and to guarantee ionic flow, blocking at the same time the electrons that have to flow from the anolyte to the catholyte through the external circuit. In a preferred embodiment of the invention, the quasi-solid proton conductive membrane may be prepared by:
(xiii) mixing:
   (xiii.a) a solvent; and
   (xiii.b) powders of one or more polymeric material(s) in an amount in the range from 0.1% by weight to 50% by weight, preferably from 5% by weight to 40% by weight, more preferably from 5% by weight to 30% by weight with respect to the quasi-solid proton exchange membrane;
(xiv) heating the solvent up to a temperature higher than the glass-transition temperature (T_{g}) of the polymer(s) employed; and,
(xv) after dissolution of the polymer(s), causing the gelation of the obtained mixture.

In a preferred embodiment of the invention, the quasi-solid proton conductive membrane may be prepared by a process in which, in step (vii) above, further to the solvent and the powders referred to respectively in points (xiii.a) and (xiii.b), are added:
(xiii.c) active carbon particles in a concentration range between 0.1% by weight and 10% by weight, preferably from 0.1% by weight to 3% by weight; and/or
(xiii.d) oxides particles in a concentration range between 0.1% by weight and 10% by weight, preferably from 0.1% by weight to 3% by weight.

In both embodiments of the quasi-solid proton exchange membrane described above, the preferred solvents for use in the invention are ethylene glycol, dimethyl sulfoxide (DMSO), N-methyl-pyrrolidone (NMP), tetrahydrofuran (THF), acetonitrile, water or mixtures thereof; especially preferred solvents are ethylene glycol or mixtures water-ethylene glycol, water-DMSO and ethylene glycol-DMSO.

Preferred polymers for use in both embodiments above are polyvinyl alcohol (PVA), poly(N-vinylpyrrolidone) (PVP), dextran (Dex), gelatin, starch, hydroxyethyl starch (HES), polyethylene oxide (PEO), chitosan, polyacrylic acid (PAA), gelatine, carboxymethyl cellulose (CMC), agar agar, poly(methyl methacrylate) (PMMA), lignin, sodium alginate, poly(vinylidene fluoride-co-hexafluoropropylene) (P(VdF-co-HFP)) and mixtures thereof.

In a preferred embodiment of the invention, polyvinyl alcohol (PVA) is dissolved using a mixture of DMSO and water with a ratio ranging from 0.1 to 1 as solvent in a concentration ranging from 3% by weight to 20% by weight.

Preferably, in order to increase the amorphous to crystalline ratio and consequently the ionic conductivity, the quasi-solid proton conductive membrane can contain some organic and inorganic particles comprising but not limited to carbon-based particles, polymeric particles and ceramic fillers particles. with average size the range from 10 nm to 1000 µm, preferably from 20 nm to 500 µm, more preferably from 20 nm to 200 µm, still more preferably from 20 nm to 100 µm in an overall concentration in the range from 0.01% by weight to 20% by weight, more preferably from 0.1% by weight to 10% by weight, still more preferably from 0.1% by weight to 5% by weight.

Acidic or alkaline quasi-solid proton conductive membranes can be obtained by mixing the solution containing the polymeric material(s) directly with an alkaline or acidic solution, by swelling it in an alkaline or acidic solution or by mixing the two processes.

In one embodiment of the invention, the quasi-solid proton conductive membrane may contain some acids comprising but not limited to sulfuric acid, phosphoric acid, phosphorous acid, hydrochloric acid, oxalic acid, acetic acid, sulfamate acid, formic acid, perchloric acid, carbonic acid, or a combination of two or more thereof in a concentration ranging from 0.1 M to 2 M, in order to have a pH of the first quasi-solid electrolyte from about 0.1 to about 6, preferably from 0.3 to 5, more preferably from 0.5 to 4. In a preferred embodiment, phosphoric and/or sulfuric acid are selected in an amount comprised in the range from 0.5 M to 1.5 M.

In still another embodiment, the quasi-solid proton conductive membrane may contain some bases necessary to increase the pH comprising but not limited to potassium hydroxide, sodium hydroxide, boron hydroxide, ammonium hydroxide, silicon hydroxide, bismuth hydroxide or a combination of two or more thereof in a concentration ranging from 0.1 M to 10 M, in order to have a pH of the first quasi-solid electrolyte from about 6 to about 14, preferably from 7 to 14, more preferably from 10 to 14. In a preferred embodiment, KOH is selected in an amount comprised in the range from 0.1 M to 7 M.

In still another embodiment, plasticizer additives can be added comprising but not limited to polyols such as polyethylene glycol (PEG), ethylene glycol, diethylene glycol (DEG), tetraethylene glycol (TEG), propylene glycol (PG), glycerol, monosaccharides (glucose, mannose, fructose, sucrose), mannitol, sorbitol and xylitol; other possible plasticizers are urea, fatty acids (e.g., oleic acid), ethanolamine, triethanolamine, vegetable oils, lecithin, waxes, amino acids and surfactants in a range between 0.1% by weight and 5% by weight, more preferably between 0.3% by weight and 3% by weight, still more preferably between 0.5% by weight and 1% by weight.

The quasi-solid proton conductive membrane is obtained by gelation following different routes like evaporation of the excess of the solvent at temperatures lower than the melting temperature of used polymer(s), cooling ramps, freeze-thaw and/or by chemical crosslinking. In a preferred embodiment, the gelation mechanism selected for the preparation of the quasi-solid proton conductive membrane is the freeze-thaw mechanism, which creates physical crosslinking in the structure. The first step consists in freezing the quasi-solid proton conductive membrane to a temperature range of -30 °C to 5 °C, preferably from -20 °C to 0 °C, still more preferably from -10 °C to -5 °C. The freezing time is selected in between 0.1 h to 12 h, preferably from 1 h to 7 h, still more preferably from 3 h to 5 h. During the second step, the quasi-solid proton conductive membrane is subject to a thaw treatment at room temperature. The thawing time is selected in between 0.1 h to 5 h, preferably from 0.3 h to 3 h, still more preferably from 0.5 h to 1 h. As a final step, the quasi-solid proton conductive membrane is subject to a thaw treatment at room temperature. The cycle is repeated from 1 to 10 times, preferably from 2 to 8 times, still more preferably from 3 to 5 times.

In still another embodiment, a chemical crosslinking agent can be added comprising but not limited to glutaraldehyde, N,N'-methylene bisacrylamide, sulfophthalic acid, sulfoacetic acid, sulfosuccinic acid, chlorosulfonic acid, boric acid. Preferably glutaraldehyde is selected as chemical crosslinking agent in a concentration ranging from 0.01% by weight to 2% by weight, preferably from 0.05% by weight to 1% by weight, still more preferably from 0.1% by weight to 0.5% by weight.

In still another embodiment, other types of commercial proton conductive membranes may be used comprising but not limited to Nafion, Daramic, Celgard, PBI-based membrane.

### The electrodes

The electrodes used in the Zn-Fe QSRB can be selected from any kind of electrode material.

In the embodiments of the invention in which the electrolytes contain the electrochemically active species in the form of ions, the electrodes also function as the current collectors of the half-cells; in other embodiments, the electrolytes contain the electrochemically active species in the form of particles, which form dispersed electrodes, and a separate element forming the current collector is needed.

In the first case, i.e., when the electrodes also constitute the current collectors, these may be made of carbon-based material, may be metallic (for instance a plate or in the form of a foam or a net), or they may be in the form of dispersed slurry electrodes.

Carbon-based electrodes/current collectors may be made, e.g., of graphite sheets, carbon felt, or carbon-based fabric; alternatively, carbon-based electrodes are formed of carbon-based conductive particles dispersed in a polymer matrix. Carbon-based electrodes are suitable for both the first and the second half-cells.

Electrodes/current collectors for use in the first half-cell may consist of a Zn metallic plate, a coated Zn metallic plate, Zn metallic foams, Zn coated metallic foams or net, carbon-based electrodes, or carbon-based electrodes coated with Zn; preferred are carbon-based electrodes.

Electrodes/current collectors for use in the second half-cell may consist of carbon-based electrode, a Fe plate, a coated Fe metallic plate or carbon-based electrodes coated with Fe; preferred are carbon-based electrodes.

In the second case, the electrodes are dispersed electrodes formed by a percolated network of dispersed particles (requiring the presence of a separate current collector). These electrodes may consists of organic or inorganic conductive particles, functionalized particles or a fluidized bed electrode in the form of particles. These electrodes can be dispersed in both quasi-solid electrolytes; they are particles in/on which redox reactions can occur. Examples of these dispersed electrodes are metallic particles, graphite, graphene, graphene oxide, transition metal oxide particles, carbon-based materials decorated with metal oxide particles, carbon nanotubes, carbon black particles, metal-coated particles or a combination of two or more thereof; the average size of these particles is in the range from 10 nm to 1000 µm, preferably from 20 nm to 500 µm, more preferably from 20 nm to 200 µm, still more preferably from 20 nm to 100 µm. In a preferred embodiment, the dispersed electrodes in the QSA may contain Zn particles, Zn coated particles and/or carbon black in an amount comprised in the range from 0.01% by weight to 50% by weight, preferably from 1 % by weight to 30% by weight, still more preferably from 5% by weight to 20% by weight. In another preferred embodiment, the dispersed electrode in the QSC may contain iron particles, iron oxides, mix oxides and/or carbon black in an amount comprised in the range from 0.01% by weight to 70% by weight, preferably from 0.1% by weight to 30% by weight, still more preferably from 2.5% by weight to 15% by weight. The composition of the dispersed electrodes can be tuned in order to impart electrode conductivity to the electrolytes.

Using dispersed electrodes provide a high surface area to minimize the over potential for zinc plating/dissolution and a higher cycle life (compared to plating on a flat electrode); in case of dispersed electrodes in the iron-based half-cell, the addition of slurry electrodes can induce a higher battery capacity.

Slurry electrodes are in the form of an ink of electrically conductive particles in/on which redox reactions can occur. Materials useful for the production of these slurry electrodes are metallic particles, graphite, graphene, graphene oxide, transition metal oxide particles, carbon-based materials decorated with metal oxide particles, carbon nanotubes, carbon black particles, metal-coated particles or a combination of two or more thereof. The average size of the particles of the slurry is in the range from 10 nm to 1000 µm, preferably from 20 nm to 500 µm, more preferably from 20 nm to 200 µm, still more preferably from 20 nm to 100 µm. The composition of the slurry can be tuned in order to impart electrode conductivity to the quasi-solid electrolytes. Polymeric powders can be introduced in the mixture, acting as binders for the other particles. In a preferred embodiment the amount of conductive carbon particles in the slurry electrode is selected from 50% to 95%, in another embodiment from 60% to 90%, in still another embodiment from 70% to 80% of the overall electrode mass. The amount of active particles containing zinc can be selected from 1% to 50%, more preferably from 5% to 30%, still more preferably from 10% to 20% of the overall electrode mass. The amount of binder is selected from 0.1% to 20%, more preferably from 0.5% to 10%, still more preferably from 5% to 10% of the overall electrode mass.

In a preferred embodiment slurry electrodes for use in the first half-cell are formed of a slurry of electrically conductive particles on which Zn/Zn²⁺ redox reaction can occur; materials useful for the production of this slurry electrode are, e.g., graphite, graphene oxide, carbon nanotubes, transition metal oxide particles, carbon-based materials decorated with metal oxide particles, the average size of the particles of the slurry is in the range from 10 nm to 1000 µm, preferably from 20 nm to 500 µm, more preferably from 20 nm to 200 µm, still more preferably from 20 nm to 100 µm.

In a preferred embodiment slurry electrodes for use in the second half-cell are formed of a slurry of electrically conductive particles on which Fe²⁺/Fe³⁺ redox reaction can occur; materials useful for the production of this slurry electrode are, e.g., graphite, graphene oxide, carbon nanotubes, transition metal oxide particles, carbon-based materials decorated with metal oxide particles, the average size of the particles of the slurry is in the range from 10 nm to 1000 µm, preferably from 20 nm to 500 µm, more preferably from 20 nm to 200 µm, still more preferably from 20 nm to 100 µm.

### The QSRB

The quasi-solid redox battery of the invention is formed by the two half-cells, characterized by the two quasi-solid electrolytes, the quasi-solid proton conductive membrane and reactions, previously described.

An iron-zinc quasi-solid redox battery in accordance with the present invention can generally have a cell potential of about 1.25 V and is generally environmentally friendly, non-toxic and safer if compared to other kind of batteries.

The QSRB of the present invention can be also electrically coupled in a so-called stacked configuration, connected either in series to obtain higher voltage values, or in parallel to obtain higher current outputs. In some embodiments, the quasi-solid electrolyte redox battery provides a specific energy between 0.1 Wh/L and 1000 Wh/L.

In the following, several specific embodiments of QSRBs of the invention are described below with reference to the attached Figures; in the Figures, same numbers correspond to identical elements.

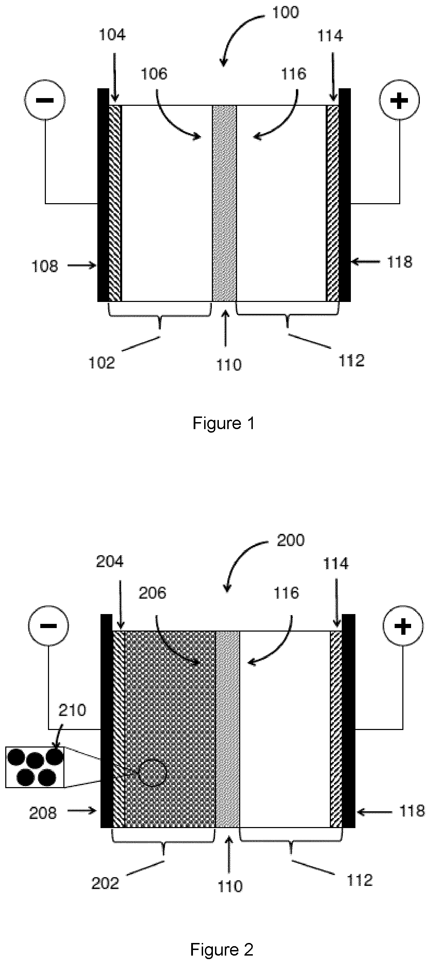

In the description of the first embodiment (with reference to Fig. 1), the operation of the QSRB is divided in two separate parts, the first part referred to the charge or recharge phase (i.e., the QSRB acting as an energy storage device) and the second part referred to the discharge phase (i.e., the QSRB acting as an energy source); this avoids ambiguities in the use of terms like cathode/anode and similar.

### Operation in (re)charge phase

In Figure 1 is shown a first embodiment of a zinc-iron QSRB, 100, of the present invention. The QSRB includes two half-cells, 102 and 112, separated by a quasi-solid proton conductive membrane, 110.

The first half-cell 102 includes electrode 104 in contact with the first quasi-solid electrolyte 106 and a current collector 108; in this half-cell takes place the cathodic reaction, the reduction of Zn²⁺ to metallic zinc, at the surface of electrode 104.

Similarly, the second half-cell 112 includes electrode 114 in contact with the second quasi-solid electrolyte 116 and a current collector 118; in this half-cell takes place the anodic reaction, the oxidation of Fe²⁺ to Fe³⁺, at the surface of electrode 114.

### Operation in discharge phase

In the discharge phase, the zinc-iron QSRB, 100, of the present invention operates contrary to the (re)charge phase described above. The elements of the QSRB are the same, but in this case in the first half-cell takes place the oxidation reaction of metallic zinc to Zn²⁺, while in the second half-cell takes place the reduction reaction of Fe³⁺ to Fe²⁺.

The description of the further embodiments of Figures 2-4 is only made with reference to the (re)charge mode.

In Figure 2, is shown a second embodiment of the zinc-iron QSRB (200) of the invention. The QSRB includes a first half-cell (202) in which the quasi-solid electrolyte contains dispersed electrodes, while the second half-cell and the quasi-solid proton conductive membrane 110 are the same as in QSRB 100 of Figure 1. In particular, the first half-cell, 202, includes dispersed electrodes 210 in contact with the quasi-solid electrolyte 206 and the electrode 204. In this case, also a further current collector (208) is generally and preferably included; this preferred condition is illustrated in the figure. The dispersed electrodes (210) act as sites where the Zn reduction reaction occurs. Percolated particles are preferably zinc particles and/or carbon-based particles. The second half-cell is the same half-cell 112, with same construction and same components, as described above with reference to Figure 1; in this half-cell takes place the anodic reaction, the oxidation of Fe²⁺ to Fe³⁺, at the surface of electrode 114.

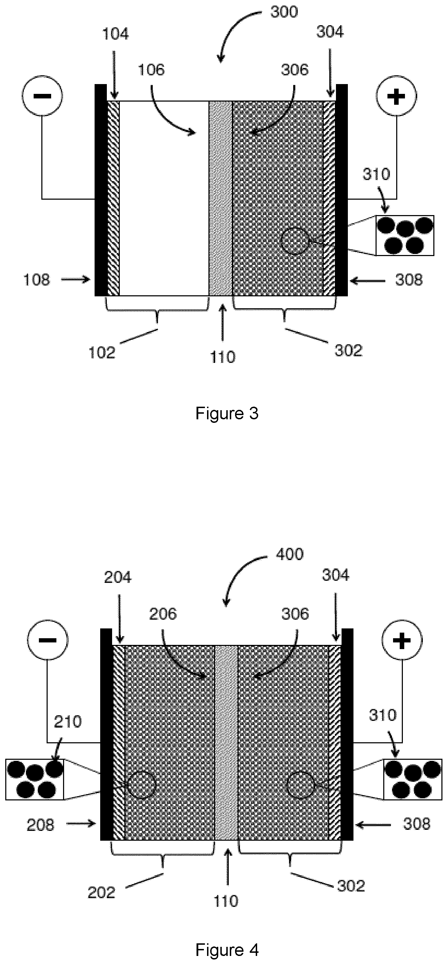

In Figure 3, is shown a third embodiment of the zinc-iron QSRB (300) of the invention. The QSRB includes a second half-cell (302) in which the quasi-solid electrolyte contains dispersed electrodes, while the first half-cell and the quasi-solid proton conductive membrane 110 are the same as in QSRB 100 of Figure 1. The second half-cell, 302, contains the quasi-solid electrolyte 306 in which are present dispersed electrodes 310; the quasi-solid electrolyte 306 is in contact with the electrode 304. In this case, also a further current collector (308) is generally and preferably included; this preferred condition is illustrated in the figure. The dispersed electrodes (310) act as sites where the anodic reaction, i.e. the oxidation of Fe²⁺ to Fe³⁺ can take place. Percolated particles are preferably carbon-based particles. The first half-cell is the same half-cell 102, with same construction and same components, as described above with reference to Figure 1; in this half-cell takes place the cathodic reaction, the reduction of Zn²⁺ to metallic zinc, at the surface of electrode 104.

A fourth possible embodiment of the invention is shown in Figure 4. In this embodiment, the QSRB, 400, is constituted by the combination of the first half-cell 202 described with reference to Figure 2, and the second half-cell 302 described with reference to Figure 2

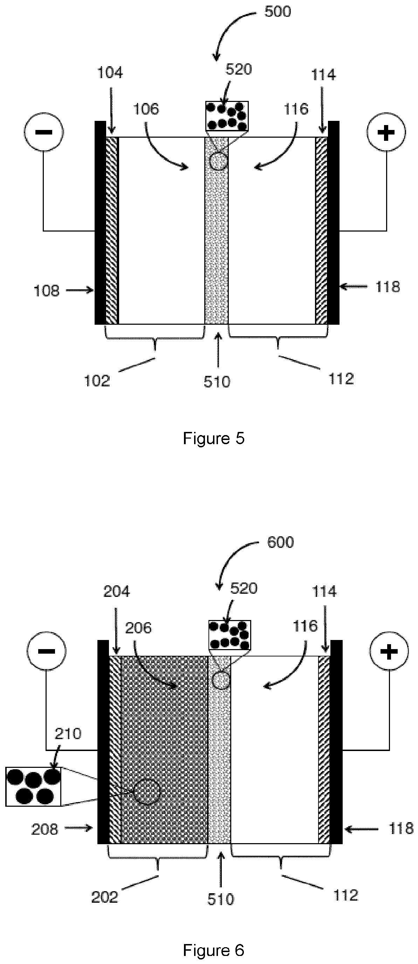

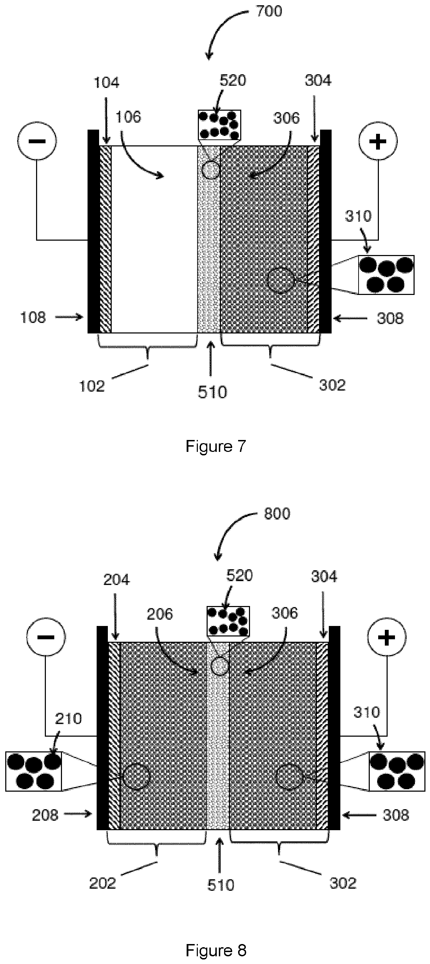

Finally, in Figures 5-8, are represented four further possible embodiments of the QSRB of the invention. QSRBs 500, 600, 700 and 800 of Figures 5, 6, 7 and 8 correspond, respectively, to the QSRBs of Figures 1, 2, 3 and 4 with regard to the pairs of half-cells, with the only difference that in QSRBs 500, 600, 700 and 800 the quasi-solid proton conductive membrane, 510, contains some organic and inorganic particles (cumulatively indicated in the figures as element 520) that increase the conductivity of the membrane.

The invention will be further illustrated by the examples that follow.

### Example 1

### Preparation of a quasi-solid anolyte

A quasi-solid anolyte has been prepared dissolving a concentration of 15% by weight of PVA in a solution containing 60:40 by volume of ethylene glycol and water at temperature equal to 85 °C to 90 °C. Once the PVA was completely dissolved, an amount of 1 M ZnCl₂ salts was added. After this step, 1 M NaCl and 100 µL of concentrated hydrochloric acid were added to the solution under stirring. The as prepared gel was cast onto a glass petri dish and gelled in controlled atmosphere at room temperature. The final formulation is shown in Table 1.

**Table 1: example of Zn-based QSA**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 159.90 | 3.63 |
| **Zinc chloride** | ZnCl₂ | 136.29 | 136.29 | 1.00 |
| **Sodium chloride** | NaCl | 58.44 | 58.44 | 1.00 |
| **Hydrochloric acid** | HCl | 36.46 | 2.19 | 0.06 |

### Example 2

### Preparation of a quasi-solid anolyte

A quasi-solid anolyte has been prepared dissolving a concentration of 20% by weight of PVA in a solution containing 60:40 by volume of DMSO and water at temperature equal to 85 °C to 90 °C. Once the PVA was completely dissolved, an amount of 0.5 M ZnCl₂ salts was added. After this step, 1 M NaCl was added to the solution under stirring. The as prepared gel was cast onto a glass petri dish and gelled in controlled atmosphere at room temperature. The final formulation is shown in Table 2.

**Table 2: example of Zn-based QSA**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 212.12 | 4.82 |
| **Zinc chloride** | ZnCl₂ | 136.29 | 68.14 | 0.50 |
| **Sodium chloride** | NaCl | 58.44 | 58.44 | 1.00 |

### Example 3

### Preparation of a quasi-solid anolyte

A quasi-solid anolyte has been prepared repeating exactly the procedure of Example 2, with the only difference that gelling took place at -5 °C. The final formulation is the same as in Table 2.

### Example 4

### Preparation of a quasi-solid anolyte with dispersed electrodes

A quasi-solid anolyte has been prepared dissolving a concentration of 15% by weight of PVA in a solution containing 60:40 by volume of ethylene glycol and water at temperature equal to 85 °C to 90 °C. Once the PVA was completely dissolved, an amount of 0.5 M ZnCl₂ salts was added. After this step, 1 M NaCl and 100 µL of concentrated hydrochloric acid were added to the solution under stirring. As final step, an amount of carbon black equal to 2% by weight of mixture has been added. The as prepared gel was cast onto a glass petri dish and gelled in controlled atmosphere at room temperature. The final formulation is shown in Table 3.

**Table 3: example of Zn-based QSA with dispersed electrodes**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 159.90 | 3.63 |
| **Zinc chloride** | ZnCl₂ | 136.29 | 68.14 | 0.50 |
| **Sodium chloride** | NaCl | 58.44 | 58.44 | 1.00 |
| **Hydrochloric acid** | HCl | 36.46 | 2.19 | 0.06 |
| **Carbon black** | C | 12.01 | 21.32 | 1.78 |

### Example 5

### Preparation of a quasi-solid anolyte with dispersed electrodes

A quasi-solid anolyte has been prepared dissolving a concentration of 15% by weight of PVA in a solution containing 60:40 by volume of ethylene glycol and water at temperature equal to 85 °C to 90 °C. Once the PVA was completely dissolved, an amount of 0.5 M ZnCl₂ salts was added. After this step, 1 M NaCl and 100 µL of concentrated hydrochloric acid were added to the solution under stirring. As final step, an amount of carbon black equal to 3% by weight of mixture has been added under vigorous stirring to achieve the percolation network and 10% by weight of zinc nano-powders are finally added to the mix. The as prepared quasi-solid anolyte was cast onto a glass petri dish and gelled in controlled atmosphere at room temperature. The final formulation is shown in Table 4.

**Table 4: example of Zn-based QSA with dispersed electrodes**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 159.90 | 3.63 |
| **Zinc chloride** | ZnCl₂ | 136.29 | 68.14 | 0.50 |
| **Sodium chloride** | NaCl | 58.44 | 58.44 | 1.00 |
| **Hydrochloric acid** | HCl | 36.46 | 2.19 | 0.06 |
| **Carbon black** | C | 12.01 | 31.98 | 2.66 |
| **Zinc** | Zn | 65.41 | 106.60 | 1.63 |

### Example 6

### Preparation of a quasi-solid anolyte

A quasi-solid anolyte has been prepared dissolving a concentration of 15% by weight of PVA in a solution containing 50:50 by volume of ethylene glycol and 6 M NaOH at temperature equal to 85 °C to 90 °C. Once the PVA was completely dissolved, an amount of 10% by weight of Zn nanoplates and 1% by weight of carbon black have been added. The particles have been dispersed with an ultrasonic probe before the addition of the PVA. The as prepared gel was cast onto a glass petri dish and gelled in controlled atmosphere at room temperature. The final formulation is shown in Table 5.

**Table 5: example of Zn-based QSA with dispersed electrodes**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 178.50 | 4.06 |
| **Zinc** | Zn | 65.41 | 119.00 | 1.82 |
| **Carbon black** | C | 12.01 | 11.90 | 0.99 |

### Example 7

### Preparation of a quasi-solid catholyte

A quasi-solid catholyte has been prepared dissolving a concentration of 15% by weight of PVA in a solution containing 60:40 by volume of DMSO and water at temperature equal to 85 °C to 90 °C. Once the PVA was completely dissolved, an amount of 0.8 M FeCl₂ and 0.8 M FeCl₃ iron salts were added in sequence waiting for the complete dissolution of each chemical compound. After this step, 1 M NaCl was added to the solution under stirring. The as prepared gel was cast onto a glass petri dish and gelled in controlled atmosphere at -10 °C. The final formulation is shown in Table 6.

**Table 6: example of Fe-based QSC**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 106.00 | 2.41 |
| **Ferrous chloride** | FeCl₂ | 198.81 | 159.05 | 0.80 |
| **Ferric chloride** | FeCl₃ | 162.20 | 129.76 | 0.80 |
| **Sodium chloride** | NaCl | 58.44 | 58.44 | 1.00 |

### Example 8

### Preparation of a quasi-solid catholyte

A quasi-solid catholyte has been prepared dissolving a concentration of 10% by weight of PVA in a solution containing 50:50 by volume of ethylene glycol and water at temperature equal to 85 °C to 90 °C. Once the PVA was completely dissolved, an amount of 0.5 M FeCl₂ and 0.5 M FeCl₃ iron salts were added in sequence waiting for the complete dissolution of each chemical compound. After this step, 1 M NaCl and 1 mL of concentrated hydrochloric acid were added to the solution under stirring. The as prepared gel was cast onto a glass petri dish and gelled in controlled atmosphere at room temperature overnight. The final formulation is shown in Table 7.

**Table 7: example of Fe-based QSC**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 105.50 | 2.40 |
| **Ferrous chloride** | FeCl₂ | 198.81 | 99.40 | 0.50 |
| **Ferric chloride** | FeCl₃ | 162.20 | 81.10 | 0.50 |
| **Sodium chloride** | NaCl | 58.44 | 58.44 | 1.00 |
| **Hydrochloric acid** | HCl | 36.46 | 21.88 | 0.60 |

### Example 9

### Preparation of a quasi-solid catholyte

A quasi-solid catholyte has been prepared repeating exactly the procedure of Example 8, with the only difference that gelling took place at -5 °C. The final formulation is the same as in Table 7.

### Example 10

### Preparation of a quasi-solid catholyte with dispersed electrodes

A catholyte has been prepared dissolving a concentration of 10% by weight of PVA in a solution containing 50:50 by volume of ethylene glycol and water at temperature equal to 85 °C to 90 °C. Once the PVA was completely dissolved, an amount of 0.5 M FeCl₂ and 0.5 M FeCl₃ iron salts were added in sequence waiting for the complete dissolution of each chemical compound. After this step, 1 M NaCl and 100 µL of concentrated hydrochloric acid were added to the solution under stirring. As final step, an amount of carbon black equal to 2% by weight of mixture has been added. The as prepared gel was cast onto a glass petri dish and gelled in controlled atmosphere at room temperature. The final formulation is shown in Table 8.

**Table 8: example of Fe-based QSC with dispersed electrodes**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 105.50 | 2.40 |
| **Ferrous chloride** | FeCl₂ | 198.81 | 99.40 | 0.50 |
| **Ferric chloride** | FeCl₃ | 162.20 | 81.10 | 0.50 |
| **Sodium chloride** | NaCl | 58.44 | 58.44 | 1.00 |
| **Hydrochloric acid** | HCl | 36.46 | 2.19 | 0.06 |
| **Carbon black** | C | 12.01 | 21.10 | 1.76 |

### Example 11

### Preparation of a quasi-solid catholyte with dispersed electrodes

A quasi-solid catholyte has been prepared repeating exactly the procedure of Example 10, with the only difference that gelling took place at -5 °C. The final formulation is the same as in Table 8.

### Example 12

### Preparation of a quasi-solid catholyte with electroactive particles

A catholyte has been prepared dissolving a concentration of 10% by weight of PVA in a solution containing 50:50 by volume of ethylene glycol and water at temperature equal to 85 °C to 90 °C. Once the PVA was completely dissolved 1 M NaCl and 100 µl of concentrated hydrochloric acid have been added. As final step, an amount of carbon black equal to 10% by weight of mixture of Fe₃O₄/Fe₂O₃ nanoparticles and 2% by weight of carbon black have been added. The as prepared gel was cast onto a glass petri dish and gelled in controlled atmosphere at room temperature. The final formulation is shown in Table 9.

**Table 9: example of Fe-based QSC with electroactive particles**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 105.50 | 2.40 |
| **Hydrochloric acid** | HCl | 36.46 | 2.19 | 0.06 |
| **Sodium chloride** | NaCl | 58.44 | 5.84 | 0.10 |
| **Carbon black** | C | 12.01 | 21.10 | 1.76 |
| **Ferrite** | Fe₃O₄/Fe₂O₃ | 231.53 | 105.50 | 0.46 |

### Example 13

### Preparation of a quasi-solid catholyte with electroactive particles

A catholyte has been prepared dissolving a concentration of 10% by weight of PVA in a solution containing 50:50 by volume of ethylene glycol and 6 M NaOH at temperature equal to 85 °C to 90 °C. Once the PVA was completely dissolved, an amount of carbon black equal to 10% by weight of mixture of Fe₃O₄/Fe₂O₃ nanoparticles and 2% by weight of carbon black have been added. The as prepared gel was cast onto a glass petri dish and gelled in controlled atmosphere at -5 °C. The final formulation is shown in Table 10.

**Table 10: example of Fe-based QSC with electroactive particles**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 105.50 | 2.40 |
| **Carbon black** | C | 12.01 | 21.10 | 1.76 |
| **Ferrite** | Fe₃O₄/Fe₂O₃ | 231.53 | 105.50 | 0.46 |

### Example 14

### Preparation of a quasi-solid proton conductive membrane

A quasi-solid proton conductive membrane has been prepared dissolving a concentration of 5% by weight of PVA in a solution containing 50:50 by volume of DMSO and water at temperature equal to 85 °C to 90 °C. The as prepared gel was deposited using the doctor blade technique with a thickness of 500 µm and then gelled in controlled atmosphere at room temperature. The so obtained quasi-solid membrane has been immersed into 1 M H₂SO₄ for one week to be swelled until the mass of the gel no longer increased. An ionic conductivity of 1.5 • 10⁻³ S/cm was measured here through Electrochemical Impedance Spectroscopy (EIS). The final formulation is shown in Table 11.

**Table 11: example of quasi-solid proton conductive membrane**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 52.50 | 1.19 |
| **Sulfuric acid** | H₂SO₄ | 98.08 | 98.08 | 1.00 |

### Example 15

### Preparation of a quasi-solid proton conductive membrane

A quasi-solid proton conductive membrane has been prepared dissolving a concentration of 5% by weight of PVA in a solution containing 50:50 by volume of DMSO and water at temperature equal to 85 ° to 90 °C. The as prepared gel was deposited using the doctor blade technique with a thickness of 500 µm and then gelled in controlled atmosphere at room temperature. The so obtained quasi-solid membrane has been immersed into 1 M H₃PO₄ for one week to be swelled until the mass of the gel no longer increased. An ionic conductivity of 2.0 • 10⁻³ S/cm was measured here through Electrochemical Impedance Spectroscopy (EIS). The final formulation is shown in Table 12.

**Table 12: example of quasi-solid proton conductive membrane**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 52.50 | 1.19 |
| **Phosphoric Acid** | H₃PO₄ | 97.99 | 97.99 | 1.00 |

### Example 16

### Preparation of a quasi-solid proton conductive membrane with carbon particles

A quasi-solid proton conductive membrane has been prepared dissolving a concentration of 5% by weight of PVA in a solution containing 50:50 by volume of DMSO and water at temperature equal to 85 °C to 90 °C. Once the PVA was completely dissolved, the 0.2% by weight of active carbon particles has been added. The as prepared gel was deposited using the doctor blade technique with a thickness of 500 µm and then gelled in controlled atmosphere at room temperature. The so obtained quasi-solid membrane has been immersed into 1 M H₂SO₄ for one week to be swelled until the mass of the gel no longer increased. An ionic conductivity of 2.0 • 10⁻³ S/cm was measured here through Electrochemical Impedance Spectroscopy (EIS). The final formulation is shown in Table 13.

**Table 13: example of quasi-solid proton conductive membrane**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 52.50 | 1.19 |
| **Active carbon** | C | 12.01 | 2.10 | 0.17 |
| **Sulfuric acid** | H₂SO₄ | 98.08 | 98.08 | 1.00 |

### Example 17

### Preparation of a quasi-solid proton conductive membrane with carbon particles e ceramic fillers

A quasi-solid proton conductive membrane has been prepared dissolving a concentration of 5% by weight of PVA in a solution containing 50:50 by volume of DMSO and 1 M H₃PO₄ at temperature equal to 85 °C to 90 °C. Once the PVA was completely dissolved, the 0.2% by weight of active carbon particles and 0.2% by weight of TiO₂ nanoparticles have been added. The as prepared gel was deposited using the doctor blade technique with a thickness of 500 µm and then gelled in controlled atmosphere at room temperature. The so obtained quasi-solid membrane has been immersed into 1 M H₂SO₄ for one week to be swelled until the mass of the gel no longer increased. An ionic conductivity of 2.7 • 10⁻³ S/cm was measured here through Electrochemical Impedance Spectroscopy (EIS), validating the positive effect of the addition of oxide particles on amorphous to crystalline ratio. The final formulation is shown in Table 14.

**Table 14: example of quasi-solid proton conductive membrane**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 54.25 | 1.23 |
| **Active carbon** | C | 12.01 | 2.10 | 0.17 |
| **Titanium dioxide** | TiO₂ | 79.87 | 2.10 | 0.03 |
| **Phosphoric Acid** | H₃PO₄ | 97.99 | 97.99 | 1.00 |

### Example 18

### Preparation of a quasi-solid proton conductive membrane

A quasi-solid proton conductive membrane has been prepared dissolving a concentration of 10% by weight of PVA in a solution containing 50:50 by volume of DMSO and 1 M NaOH at temperature equal to 85 °C to 90 °C. Once the PVA was completely dissolved, the 0.2% by weight of active carbon particles and 1% by weight of PEG2000 have been added. The as prepared gel was deposited using the doctor blade technique with a thickness of 500 µm and then gelled in controlled atmosphere at room temperature. The so obtained quasi-solid membrane has been immersed into 1 M NaOH for one week to be swelled until the mass of the gel no longer increased. An ionic conductivity of 2.5 • 10⁻³ S/cm was measured here through Electrochemical Impedance Spectroscopy (EIS), validating the positive effect of the addition of oxide particles on amorphous to crystalline ratio. The final formulation is shown in Table 15.

**Table 15: example of quasi-solid proton conductive membrane**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 107.00 | 2.43 |
| **Active carbon** | C | 12.01 | 2.14 | 0.18 |
| **PEG2000** | C₂ₙH₄ₙ₊₂Oₙ₊₁ | 62.02 | 10.70 | 0.17 |
| **Sodium hydroxide** | NaOH | 40.00 | 40.00 | 1.00 |

### Example 19

### Preparation of a quasi-solid proton conductive membrane

A quasi-solid proton conductive membrane has been prepared dissolving a concentration of 10% by weight of PVA in a solution containing 50:50 by volume of DMSO and 1 M NaOH at temperature equal to 85 °C to 90 °C. Once the PVA was completely dissolved, the 0.2% by weight of active carbon particles and 1% by weight of PEG 2000 have been added. The as prepared gel was deposited using the doctor blade technique with a thickness of 500 µm and then gelled in controlled atmosphere at -5 °C. The so obtained quasi-solid membrane has been immersed into 1 M NaOH for one week to be swelled until the mass of the gel no longer increased. The final formulation is shown in Table 16.

**Table 16: example of quasi-solid proton conductive membrane**

| **Chemical compound** | **Chemical formula** | **Molar mass [g/mol]** | **Concentration [g/L]** | **Concentration [mol/l]** |
|---|---|---|---|---|
| **Polyvinyl alcohol** | (C₂H₄O)ₓ | 44.00 | 107.00 | 2.43 |
| **Active carbon** | C | 12.01 | 2.14 | 0.18 |
| **PEG2000** | C₂ₙH₄ₙ₊₂Oₙ₊₁ | 62.02 | 10.70 | 0.17 |
| **Sodium hydroxide** | NaOH | 40.00 | 40.00 | 1.00 |

### Example 20

### Electrochemical characterization of zinc-based QSA for the QSRB half cell

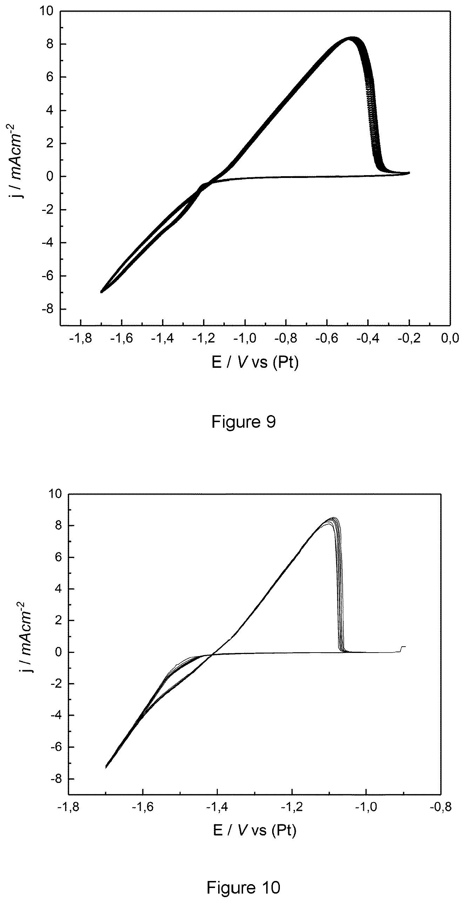

The electrochemical behavior of the quasi-solid anolyte prepared according to Example 1 has been characterized with cyclic voltammetries in a classical three electrodes cell using platinum wires as working electrode, counter electrode and reference electrode with Biologic VMP-300 potentiostat/galvanostat at 25 °C applying a scan rate of 25 mV/s. As shown in Figure 9, the classical peaks for Zn deposition and stripping can be detected. The cathodic efficiency of the process can be estimated to be equal to 95%.

### Example 21

### Electrochemical characterization of zinc-based QSA for the QSRB half cell

The electrochemical behavior of the quasi-solid anolyte prepared according to Example 4 has been characterized with cyclic voltammetries in a classical three electrodes cell using platinum wires as working electrode, counter electrode and reference electrode with Biologic VMP-300 potentiostat/galvanostat at 25 °C applying a scan rate of 25 mV/s.

As shown in Figure 10, the classical peaks for Zn deposition and stripping can be detected. The cathodic efficiency of the process can be estimated to be equal to 95%.

### Example 22

### Electrochemical characterization of iron-based QSC for the QSRB half cell

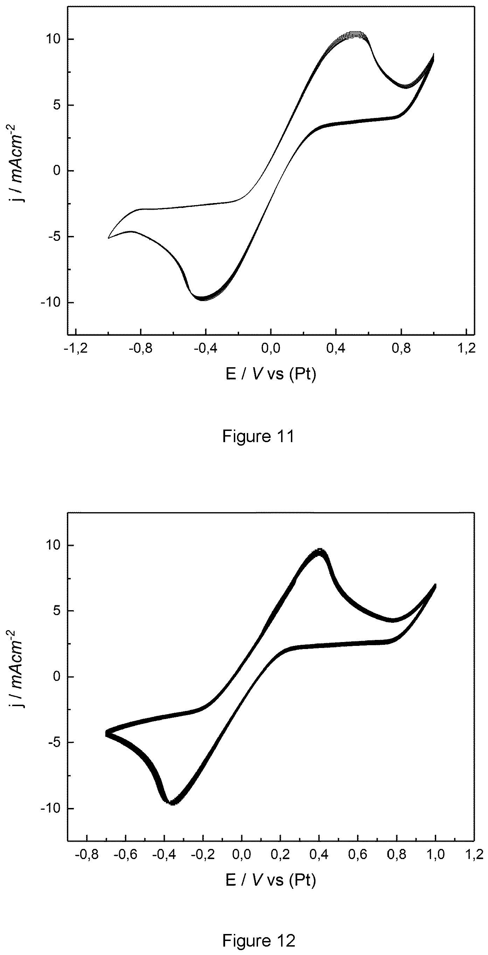

The electrochemical behavior of the quasi-solid catholyte prepared according to Example 9 has been characterized with cyclic voltammetries in a classical three electrodes cell using platinum wires as working electrode, counter electrode and reference electrode with Biologic VMP-300 potentiostat/galvanostat at 25 °C applying a scan rate of 25 mV/s. As shown in Figure 11, the classical peaks for Fe²⁺/Fe³⁺ redox reaction can be detected. The cathodic efficiency of the process can be estimated to be equal to 98%.

### Example 23

### Electrochemical characterization of iron-based QSC for the QSRB half cell

The electrochemical behavior of the quasi-solid catholyte prepared according to Example 10 has been characterized with cyclic voltammetries in a classical three electrodes cell using platinum wires as working electrode, counter electrode and reference electrode with Biologic VMP-300 potentiostat/galvanostat at 25 °C applying a scan rate of 25 mV/s. As shown in Figure 12, the classical peaks for Fe²⁺/Fe³⁺ redox reaction can be detected. The cathodic efficiency of the process can be estimated to be equal to 98%.

### Example 24

### Electrochemical characterization of quasi-solid proton conductive membrane

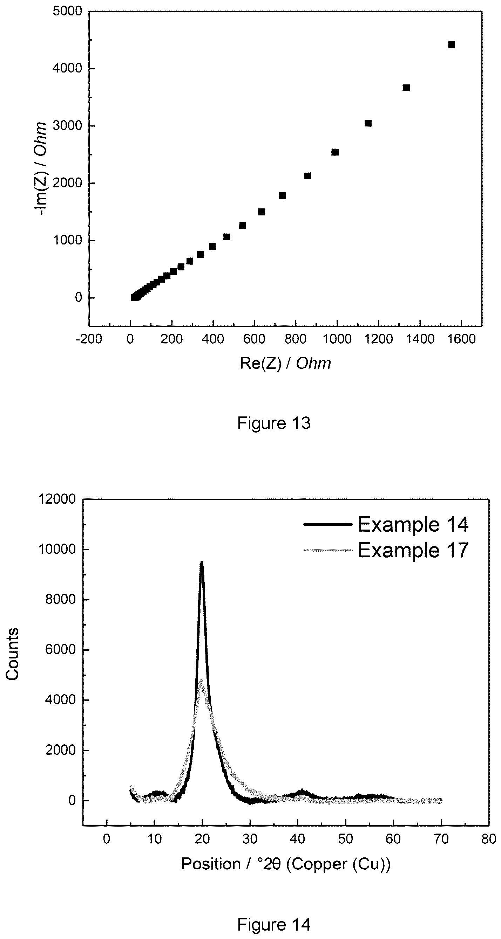

The electrochemical behavior of the quasi-solid proton conductive membrane prepared according to Example 15 has been characterized with electrochemical impedance spectroscopy (EIS) using two stainless steel AISI 316 circular electrodes of area of 1.96 cm² and applying a frequencies range between 1 MHz to 0.1 Hz, with a potential amplitude of a single sine wave set at 10 mV. An ionic conductivity of 2.0 • 10⁻³ S/cm was measured here through Electrochemical Impedance Spectroscopy (EIS) (Figure 13).

### Example 25

### Electrochemical characterization of quasi-solid proton conductive membrane

The electrochemical behavior of the quasi-solid proton conductive membrane prepared according to Example 17 has been characterized with electrochemical impedance spectroscopy (EIS) using two stainless steel AISI 316 circular electrodes of area of 1.96 cm² and applying a frequencies range between 1 MHz to 0.1 Hz, with a potential amplitude of a single sine wave set at 10 mV. An ionic conductivity of 2.7 • 10⁻³ S/cm was measured here through Electrochemical Impedance Spectroscopy (EIS). Figure 14 shows the XRD spectra for both samples where the positive effect of the addition of oxide particles on amorphous to crystalline ratio, responsible for higher conductivity, is shown.

### Example 26

### Electrochemical characterization of quasi-solid proton conductive membrane

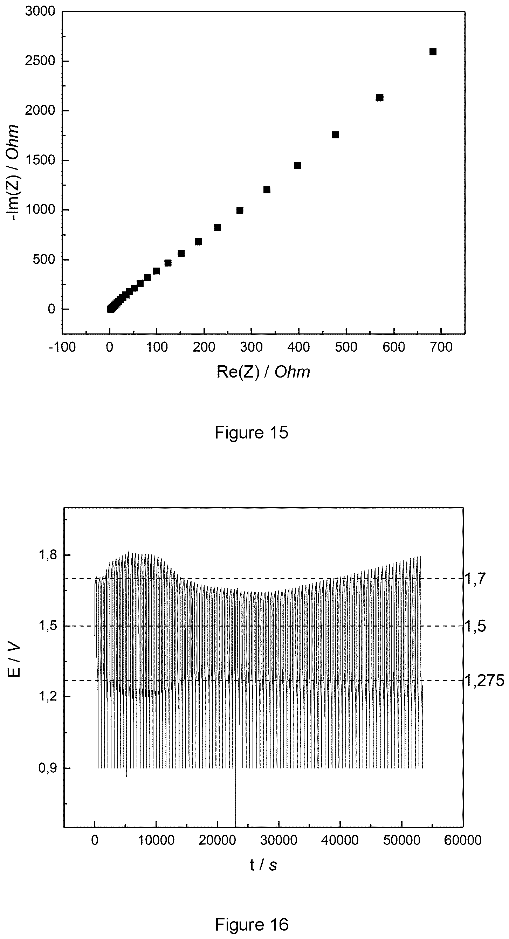

The electrochemical behavior of the quasi-solid proton conductive membrane prepared according to Example 18 has been characterized with electrochemical impedance spectroscopy (EIS) using two stainless steel AISI 316 circular electrodes of area of 1.96 cm² and applying a frequencies range between 1 MHz to 0.1 Hz, with a potential amplitude of a single sine wave set at 10 mV. An ionic conductivity of 2.5 • 10⁻³ S/cm was measured here through Electrochemical Impedance Spectroscopy (EIS) Figure 15.

### Example 27

### Zn-Fe QSRB assembly

The quasi-solid redox battery was assembled using quasi-solid electrolytes prepared according to Example 1 and Example 7 and the quasi-solid proton exchange membrane prepared following the Example 14 having the structure shown in Figure 1. In this case graphite foils with a thickness of 100 µm have been used as electrodes and current collectors for both half-cells.

### Example 28

### Zn-Fe QSRB assembly

The quasi-solid redox battery was assembled using quasi-solid electrolytes prepared according to Example 1 and Example 7 and the quasi-solid proton exchange membrane prepared following the Example 17 having the structure shown in Figure 1. In this case, a zinc plate has been used as electrode and current collector in the first half-cell, while graphite foil with a thickness of 100 µm has been used as electrode and current collector in the second half-cell.

### Example 29

### Zn-Fe QSRB assembly

The quasi-solid redox battery was assembled using quasi-solid electrolytes prepared according to Example 3 and Example 9 and the quasi-solid proton exchange membrane prepared following the Example 15 having the structure shown in Figure 1. In this case, a zinc plate has been used as electrode and current collector in the first half-cell, while graphite foil with a thickness of 100 µm has been used as electrode and current collector in the second half-cell.

### Example 30

### Zn-Fe QSRB assembly

The quasi-solid redox battery was assembled using quasi-solid electrolytes prepared according to Example 5 and Example 10 and the quasi-solid proton exchange membrane prepared following the Example 15 having the structure shown in Figure 3. In this case graphite foils with a thickness of 100 µm have been used as electrodes and current collectors for both half-cells.

### Example 31

### Zn-Fe QSRB assembly

The quasi-solid redox battery was assembled using quasi-solid electrolytes prepared according to Example 5 and Example 10 and the quasi-solid proton exchange membrane prepared following the Example 16 having the structure shown in Figure 4. In this case graphite foils with a thickness of 100 µm have been used as electrodes and current collectors for both half-cells.

### Example 32

### Zn-Fe QSRB assembly

The quasi-solid redox battery was assembled using quasi-solid electrolytes prepared according to Example 1 and Example 7. The QSRB was assembled using a commercial Nafion 212 membrane activated in a solution containing H₂SO₄ 1 M. The structure of the QSRB is shown in Figure 1. In this case graphite foils with a thickness of 100 µm have been used as electrodes and current collectors for both half-cells.

### Example 33

### Zn-Fe QSRB assembly

The quasi-solid redox battery was assembled using quasi-solid electrolytes prepared according to Example 6 and Example 13 and the quasi-solid proton exchange membrane prepared following the Example 18 having the structure shown in Figure 3. In this case graphite foils with a thickness of 100 µm have been used as electrodes and current collectors for both half-cells.

### Example 34

### Zn-Fe QSRB assembly

The quasi-solid redox battery was assembled using quasi-solid electrolytes prepared according to Example 6 and Example 13 and the quasi-solid proton exchange membrane prepared following the Example 18 having the structure shown in Figure 3. In this case, a zinc plate has been used as electrode and current collector in the first half-cell, while graphite foil with a thickness of 100 µm has been used as electrode and current collector in the second half-cell.

### Example 35

### Zn-Fe QSRB testing

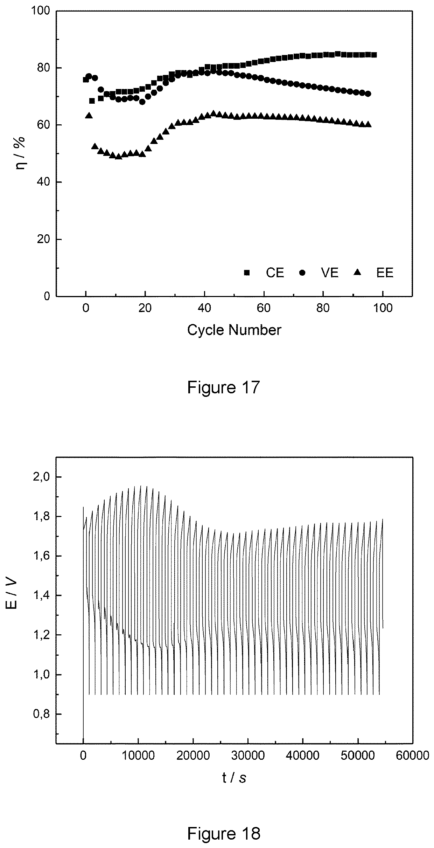

A method of operating the semi-solid redox battery is herein described: the semi-solid electrolytes, assembled as reported in Example 27, were charged and discharged electrochemically. The quasi-solid redox battery was charged and discharged in a current range from 0.1 to 25 mA/cm² for a high number of cycles and time to test the cyclability and the resistance of the membrane toward cross-contamination of the two electrolytes. A charging voltage of 1.75 V, a discharging voltage of 1.25 V and an OCV of 1.50 V were measured as shown in Figure 16. The energetic, voltaic and coulombic efficiency values are shown in Figure 17.

### Example 36

### Zn-Fe QSRB testing

A method of operating the semi-solid redox battery is herein described: the semi-solid electrolytes, assembled as reported in Example 30 were charged and discharged electrochemically. The quasi-solid redox battery was charged and discharged in a current range from 0.1 to 25 mA/cm² for a high number of cycles and time to test the cyclability and the resistance of the membrane toward cross-contamination of the two electrolytes. A charging voltage of 1.75 V, a discharging voltage of 1.25 V and an OCV of 1.50 V were measured as shown in Figure 18.

### Example 37

### Zn-Fe QSRB testing

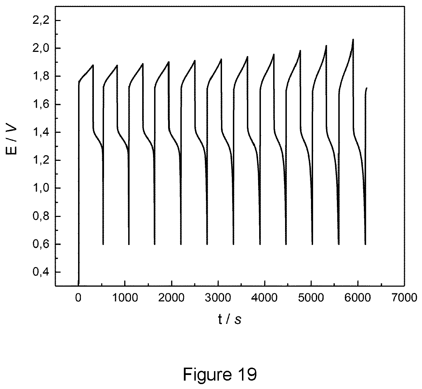

A method of operating the semi-solid redox battery is herein described: the semi-solid electrolytes, assembled as reported in Example 32 were charged and discharged electrochemically. The quasi-solid redox battery was charged and discharged in a current range from 0.1 to 25 mA/cm² for a high number of cycles and time to test the cyclability and the resistance of the membrane toward cross-contamination of the two electrolytes. A charging voltage of 1.75 V, a discharging voltage of 1.25 V and an OCV of 1.50 V were measured as shown in Figure 19.

## Claims

1. A Zn-Fe quasi-solid redox battery (100; 200; 300; 400; 500; 600; 700; 800) comprising:
- a first half-cell (102; 202) comprising: a first quasi-solid electrolyte selected from a first quasi-solid electrolyte (106) in which are dissolved Zn²⁺ ions and a first quasi-solid electrolyte (206) in which are dispersed organic and/or inorganic electroactive particles (210) containing zinc ions in different oxidation states; a current collector (108; 208); and an electrode (104; 204, 210) disposed within the first half-cell;
- a second half-cell (112; 302) comprising: a second quasi-solid electrolyte selected from a second quasi-solid electrolyte (116) in which are dissolved Fe²⁺ and Fe³⁺ ions and a second quasi-solid electrolyte (306) in which are dispersed organic and/or inorganic electroactive particles (310) containing Fe²⁺ and Fe³⁺ ions; a current collector (118; 318); and an electrode (114; 304, 310) disposed within the second half-cell; and
- a separator (110; 510) between the two half-cells,
wherein said first and second quasi-solid electrolytes are, independently from each other, in the form of a plasticized polymer electrolyte (PPE) or of a composite polymer electrolyte (CPE).

2. A Zn-Fe quasi-solid redox battery according to claim 1, wherein said first quasi-solid electrolyte (106) is a plasticized polymer electrolyte (PPE) containing Zn²⁺ ions and is prepared by:
(i) mixing:
(i.a) a solvent;
(i.b) powders of one or more polymeric material(s) in an amount comprised in the range from 0.1% by weight to 50% by weight, preferably from 5% by weight to 40% by weight, still more preferably from 5% by weight to 30% by weight with respect to the QSA; and
(i.c) one or more zinc salt(s) soluble in the solvent, in such an amount to have a concentration of Zn²⁺ ions between 0.001 M and 10 M, preferably from 0.1 M to 5 M, still more preferably from 0.3 M to 2 M;
(ii) heating the solvent up to a temperature higher than the glass-transition temperature (T_{g}) of the polymer(s) employed; and,
(iii) after dissolution of the polymer(s) and zinc salt(s), causing the gelation of the obtained mixture.

3. A Zn-Fe quasi-solid redox battery according to claim 2, wherein said zinc salts are selected among zinc chloride (ZnCl₂), zinc sulfate (ZnSO₄), zinc sulfamate (Zn(SO₃NH₂)₂), zinc acetate (Zn(CH₃COO)₂), zinc carbonate (ZnCOs) and mixtures thereof.

4. A Zn-Fe quasi-solid redox battery according to claim 1, wherein said first quasi-solid electrolyte (206) is a composite polymer electrolyte (CPE) with electroactive particles (210) containing zinc and is prepared by:
(iv) dissolving powders of one or more polymeric material(s), in an amount comprised in the range from 0.1% by weight to 50% by weight, in a solvent heated up to a temperature higher than the glass-transition temperature (T_{g}) of the polymer(s) employed;
(v) dispersing in the solution thus obtained organic and/or inorganic electroactive particles containing zinc ions in different oxidation states, said particles having size in the range from 10 nm to 1000 µm, and being in an amount in the range from 0.01% by weight to 50% by weight; and
(vi) after dissolution of the polymer(s) and addition of the zinc electroactive particles, causing the gelation of the obtained mixture.

5. A Zn-Fe quasi-solid redox battery according to any one of the preceding claims, in which said second quasi-solid electrolyte (116) is a plasticized polymer electrolyte (PPE) containing Fe²⁺ and Fe³⁺ ions and is prepared by:
(vii) mixing:
(vii.a) a solvent;
(vii.b) powders of one or more polymeric material(s) in an amount in the range from 0.1% by weight to 50% by weight, preferably from 5% by weight to 40% by weight, more preferably from 5% by weight to 30% by weight with respect to the QSC; and
(vii.c) a mixture of one or more ferrous (Fe²⁺) salts and one or more ferric (Fe³⁺) salts soluble in the solvent, in such an amount to obtain a concentration of Fe²⁺ ions in the range from 0.001 M to 10 M and/or Fe³⁺ ions concentration in the range of 0.01 M to 10 M;
(viii) heating the solvent up to a temperature higher than the glass-transition temperature (T_{g}) of the polymer(s) employed; and,
(ix) after dissolution of the polymer(s) and iron salt(s), causing the gelation of the obtained mixture.

6. A Zn-Fe quasi-solid redox battery according to claim 5, wherein said iron salts are selected among iron chlorides, iron sulfates, iron sulfamates, iron acetates, iron nitrates, iron carbonates and mixtures thereof.

7. A Zn-Fe quasi-solid redox battery according to any one of the preceding claims, in which said separator (110) is a quasi-solid proton conductive membrane prepared by:
(xiii) mixing:
(xiii.a) a solvent; and
(xiii.b) powders of one or more polymeric material(s) in an amount in the range from 0.1% by weight to 50% by weight with respect to the quasi-solid proton exchange membrane;
(xiv) heating the solvent up to a temperature higher than the glass-transition temperature (T_{g}) of the polymer(s) employed; and,
(xv) after dissolution of the polymer(s), causing the gelation of the obtained mixture.

8. A Zn-Fe quasi-solid redox battery according to any one of the preceding claims, in which the polymer used in the preparation of the first and second quasi-solid electrolytes and of the quasi-solid proton conductive membrane is selected among polyvinyl alcohol (PVA), poly(N-vinylpyrrolidone) (PVP), dextran (Dex), gelatin, starch, hydroxyethyl starch (HES), polyethylene oxide (PEO), chitosan, polyacrylic acid (PAA), gelatine, carboxymethyl cellulose (CMC), agar agar, poly(methyl methacrylate) (PMMA), lignin, sodium alginate, poly(vinylidene fluoride-co-hexafluoropropylene) (P(VdF-co-HFP)) and mixtures thereof.

9. A Zn-Fe quasi-solid redox battery according to any one of the preceding claims, in which either or both said first and second quasi-solid electrolytes have a pH ranging from about 0.1 to about 6, obtained by addition of an acid selected among sulfuric acid, phosphoric acid, phosphorous acid, hydrochloric acid, oxalic acid, acetic acid, sulfamate acid, formic acid, perchloric acid, carbonic acid, methane sulfonic acid, or a combination thereof, in a concentration ranging from 0.1 M to 2 M.

10. A Zn-Fe quasi-solid redox battery according to any one of the preceding claims, in which either or both said first and second quasi-solid electrolytes have a pH ranging from about 6 to about 14, obtained by addition of a base selected among potassium hydroxide, sodium hydroxide, boron hydroxide, ammonium hydroxide or a combination thereof in a concentration ranging from 0.1 M to 10 M.

11. A Zn-Fe quasi-solid redox battery according to any one of the preceding claims, in which either or both said first and second quasi-solid electrolytes contain one or more additives selected among a hydrogen evolution suppressor, a pH buffering agent, a levelling agent, a metallic salt selected among AlCl₃, Al₂(SO₄)₃, MgCl₂, MgSO₄, NaCl, Na₂SO₄, LiCl, Li₂SO₄, KCl, NH₄Cl, Rochelle salts or combinations thereof to support the quasi-solid electrolyte conductivity, emulsifiers, fillers, plasticizers, and organic and/or inorganic particles selected among carbon-based particles, polymeric particles and ceramic filler particles to increase the amorphous to crystalline ratio in said quasi-solid electrolytes.

12. A Zn-Fe quasi-solid redox battery according to any one of the preceding claims in which, when said second quasi-solid electrolytes contains Fe²⁺ and Fe³⁺ ions, it further contains a complexing agent for said ions selected among soluble citrate salts, tartaric salts, ammonium-based salts, oxalic salts and EDTA, in a concentration between 0.001 M to 10 M.

13. A Zn-Fe quasi-solid redox battery according to any one of the preceding claims in which, when said second quasi-solid electrolytes contains Fe²⁺ and Fe³⁺ ions, it further contains a stabilizing agent of said ions selected among ammonium salts, oxalates, acetates, tartrates, ascorbic acid, ethylene glycol and dimethyl sulfoxide (DMSO), in a range between 0.001 M and 10 M.

14. A Zn-Fe quasi-solid redox battery according to any one of the preceding claims, in which said quasi-solid proton conductive membrane further contains one or more of:
- organic and/or inorganic particles selected among carbon-based particles, polymeric particles and ceramic fillers particles, with average size the range from 10 nm to 1000 µm and in an overall concentration in the range from 0.01% by weight to 20% by weight, in order to increase the ionic conductivity of the membrane;
- a plasticizer additive selected among polyethylene glycol (PEG), ethylene glycol, diethylene glycol (DEG), tetraethylene glycol (TEG), propylene glycol (PG), glycerol, monosaccharides, mannitol, sorbitol, xylitol, urea, fatty acids, ethanolamine, triethanolamine, vegetable oils, lecithin, waxes, amino acids and surfactants in a range between 0.1% by weight and 5% by weight; and
- a chemical crosslinking agent selected among glutaraldehyde, N,N'-methylene bisacrylamide, sulfophthalic acid, sulfoacetic acid, sulfosuccinic acid, chlorosulfonic acid and boric acid;
- either an acid selected among sulfuric acid, phosphoric acid, phosphorous acid, hydrochloric acid, oxalic acid, acetic acid, sulfamate acid, formic acid, perchloric acid, carbonic acid, methane sulfonic acid or a combination thereof, in a concentration ranging from 0.1 M to 2 M; or a base selected among potassium hydroxide, sodium hydroxide, boron hydroxide, ammonium hydroxide or a combination thereof in a concentration ranging from 0.1 M to 10 M.

15. A Zn-Fe quasi-solid redox battery according to any one of the preceding claims, in which said current collectors (104; 204; 304) are made of a material selected between carbon-based materials or metals.

## Patentansprüche

1. Quasifeste Zn-Fe-Redox-Batterie (100; 200; 300; 400; 500; 600; 700; 800), umfassend:
- eine erste Halbzelle (102; 202), umfassend: einen ersten quasifesten Elektrolyten, ausgewählt aus einem ersten quasifesten Elektrolyten (106), in dem Zn²⁺ -Ionen gelöst sind, und einem ersten quasifesten Elektrolyten (206), in dem organische und/oder anorganische elektroaktive Partikel (210) dispergiert sind, die Zinkionen in verschiedenen Oxidationsstufen enthalten; einen Stromkollektor (108; 208); und eine Elektrode (104; 204, 210), die innerhalb der ersten Halbzelle angeordnet ist;
- eine zweite Halbzelle (112; 302), umfassend: einen zweiten quasifesten Elektrolyten, ausgewählt aus einem zweiten quasifesten Elektrolyten (116), in dem Fe²⁺ - und Fe³⁺ -Ionen gelöst sind, und einem zweiten quasifesten Elektrolyten (306), in dem organische und/oder anorganische elektroaktive Partikel (310) dispergiert sind, die Fe²⁺ - und Fe³⁺ -Ionen enthalten; einen Stromkollektor (118; 318); und eine Elektrode (114; 304, 310), die innerhalb der zweiten Halbzelle angeordnet ist; und
- einen Separator (110; 510) zwischen den beiden Halbzellen,
wobei der erste und der zweite quasifeste Elektrolyt unabhängig voneinander in Form eines plastifizierten Polymerelektrolyten (PPE) oder eines Verbundpolymerelektrolyten (CPE) vorliegen.

2. Quasifeste Zn-Fe-Redox-Batterie nach Anspruch 1, wobei der erste quasifeste Elektrolyt (106) ein plastifizierter Polymerelektrolyt (PPE) ist, der Zn²⁺ - Ionen enthält und hergestellt wird durch:
(i) Mischen von:
(i.a) einem Lösungsmittel;
(i.b) Pulvern aus einem oder mehreren polymeren Materialien in einer Menge im Bereich von 0,1 Gew.-% bis 50 Gew.-%, vorzugsweise von 5 Gew.-% bis 40 Gew.-%, noch bevorzugter von 5 Gew.-% bis 30 Gew.-%, bezogen auf die QSA; und
(i.c) einem oder mehreren in dem Lösungsmittel löslichen Zinksalz(en) in einer solchen Menge, dass die Konzentration der Zn²⁺ -Ionen zwischen 0,001 M und 10 M, vorzugsweise zwischen 0,1 M und 5 M, noch bevorzugter zwischen 0,3 M und 2 M liegt;
(ii) Erhitzen des Lösungsmittels auf eine Temperatur, die höher ist als die Glasübergangstemperatur (T_{g}) des/der verwendeten Polymers/Polymere; und
(iii) nach dem Auflösen des/der Polymers/Polymere und des/der Zinksalzes/Zinksalze, Bewirken der Gelierung des erhaltenen Gemischs.

3. Quasifeste Zn-Fe-Redox-Batterie nach Anspruch 2, wobei die Zinksalze ausgewählt sind aus Zinkchlorid (ZnCl₂), Zinksulfat (ZnSO₄), Zinksulfamat (Zn(SO₃NH₂)₂), Zinkacetat (Zn(CH₃COO)₂), Zinkcarbonat (ZnCOs) und Mischungen davon.

4. Quasifeste Zn-Fe-Redox-Batterie nach Anspruch 1, wobei der erste quasifeste Elektrolyt (206) ein Verbundpolymerelektrolyt (CPE) mit elektroaktiven Partikeln (210) ist, die Zink enthalten, und hergestellt wird durch:
(iv) Auflösen von Pulvern eines oder mehrerer polymerer Materialien in einer Menge im Bereich von 0,1 Gew.-% bis 50 Gew.-% in einem Lösungsmittel, das auf eine höhere Temperatur als die Glasübergangstemperatur (T_{g}) des/der verwendeten Polymers/Polymere erhitzt wird;
(v) Dispergieren in der so erhaltenen Lösung von organischen und/oder anorganischen elektroaktiven Partikeln, die Zinkionen in verschiedenen Oxidationsstufen enthalten, wobei die Partikel eine Größe im Bereich von 10 nm bis 1000 µm aufweisen und in einer Menge im Bereich von 0,01 Gew.-% bis 50 Gew.-% vorliegen; und
(vi) nach dem Auflösen des/der Polymers/Polymere und Zugabe der elektroaktiven Zinkpartikel, Bewirken der Gelierung des erhaltenen Gemischs.

5. Quasifeste Zn-Fe-Redox-Batterie nach einem der vorstehenden Ansprüche, wobei der zweite quasifeste Elektrolyt (116) ein plastifizierter Polymerelektrolyt (PPE) ist, der Fe²⁺ - und Fe³⁺ -Ionen enthält und hergestellt wird durch:
(vii) Mischen von:
(vii.a) einem Lösungsmittel;
(vii.b) Pulvern aus einem oder mehreren polymeren Materialien in einer Menge im Bereich von 0,1 Gew.-% bis 50 Gew.-%, vorzugsweise von 5 Gew.-% bis 40 Gew.-%, noch bevorzugter von 5 Gew.-% bis 30 Gew.-%, bezogen auf die OSC; und
(vii.c) einem Gemisch aus einem oder mehreren eisenhaltigen (Fe²⁺)-Salzen und einem oder mehreren eisenhaltigen (Fe³⁺)-Salzen, die in dem Lösungsmittel löslich sind, in einer solchen Menge, dass eine Konzentration von Fe²⁺ -Ionen im Bereich von 0,001 M bis 10 M und/oder eine Konzentration von Fe³⁺ -Ionen im Bereich von 0,01 M bis 10 M erhalten wird;
(viii) Erhitzen des Lösungsmittels auf eine Temperatur, die höher ist als die Glasübergangstemperatur (T_{g}) des/der verwendeten Polymers/Polymere; und
(ix) nach dem Auflösen des/der Polymers/Polymere und des/der Eisensalzes/Eisensalze, Bewirken der Gelierung des erhaltenen Gemischs.

6. Quasifeste Zn-Fe-Redox-Batterie nach Anspruch 5, wobei die Eisensalze ausgewählt sind aus Eisenchloriden, Eisensulfaten, Eisensulfamaten, Eisenacetaten, Eisennitraten, Eisencarbonaten und Mischungen davon.

7. Quasifeste Zn-Fe-Redox-Batterie nach einem der vorstehenden Ansprüche, wobei der Separator (110) eine quasifeste protonenleitende Membran ist, die hergestellt wird durch:
(xiii) Mischen von:
(xiii.a) einem Lösungsmittel; und
(xiii.b) Pulvern aus einem oder mehreren polymeren Materialien in einer Menge im Bereich von 0,1 Gew.-% bis 50 Gew.-%, bezogen auf die quasifeste Protonenaustauschmembran;
(xiv) Erhitzen des Lösungsmittels auf eine Temperatur, die höher ist als die Glasübergangstemperatur (T_{g}) des/der verwendeten Polymers/Polymere; und
(xv) nach dem Auflösen des/der Polymers/Polymere, Bewirken der Gelierung des erhaltenen Gemischs.

8. Quasifeste Zn-Fe-Redox-Batterie nach einem der vorstehenden Ansprüche, wobei das bei der Herstellung der ersten und zweiten quasifesten Elektrolyte und der quasifesten protonenleitenden Membran verwendete Polymer ausgewählt ist aus Polyvinylalkohol (PVA), Poly(N-vinylpyrrolidon) (PVP), Dextran (Dex), Gelatine, Stärke, Hydroxyethylstärke (HES), Polyethylenoxid (PEO), Chitosan, Polyacrylsäure (PAA), Gelatine, Carboxymethylcellulose (CMC), Agar-Agar, Poly(methylmethacrylat) (PMMA), Lignin, Natriumalginat, Poly(vinylidenfluorid-co-hexafluorpropylen) (P(VdF-co-HFP)) und Mischungen davon.

9. Quasifeste Zn-Fe-Redox-Batterie nach einem der vorstehenden Ansprüche, wobei einer oder beide der ersten und zweiten quasifesten Elektrolyte einen pH-Wert im Bereich von etwa 0,1 bis etwa 6 aufweisen, erhalten durch Zugabe einer Säure, ausgewählt aus Schwefelsäure, Phosphorsäure, Phosphonsäure, Salzsäure, Oxalsäure, Essigsäure, Sulfamatsäure, Ameisensäure, Perchlorsäure, Kohlensäure, Methansulfonsäure oder einer Kombination davon, in einer Konzentration im Bereich von 0,1 M bis 2 M.

10. Quasifeste Zn-Fe-Redox-Batterie nach einem der vorstehenden Ansprüche, wobei einer oder beide der ersten und zweiten quasifesten Elektrolyte einen pH-Wert im Bereich von etwa 6 bis etwa 14 aufweisen, erhalten durch Zugabe einer Base, ausgewählt aus Kaliumhydroxid, Natriumhydroxid, Borhydroxid, Ammoniumhydroxid oder einer Kombination davon, in einer Konzentration im Bereich von 0,1 M bis 10 M.

11. Quasifeste Zn-Fe-Redox-Batterie nach einem der vorstehenden Ansprüche, wobei einer oder beide der ersten und zweiten quasifesten Elektrolyte ein oder mehrere Additive enthalten, ausgewählt aus einem Wasserstoffentwicklungsunterdrücker, einem pH-Puffermittel, einem Egalisierhilfsmittel, einem Metallsalz, ausgewählt aus AlCl₃, Al₂(SO₄)₃, MgCl₂, MgSO₄, NaCl, Na₂SO₄, LiCl, Li₂SO₄, KCI, NH₄Cl, Rochelle-Salze oder Kombinationen davon, zur Unterstützung der Leitfähigkeit der quasifesten Elektrolyten, Emulgatoren, Füllstoffe, Weichmacher, und organische und/oder anorganische Partikel, ausgewählt aus Partikeln auf Kohlenstoffbasis, polymeren Partikeln und keramischen Füllstoffpartikeln, um das Verhältnis von amorphen zu kristallinen Partikeln in den quasifesten Elektrolyten zu erhöhen.

12. Quasifeste Zn-Fe-Redox-Batterie nach einem der vorstehenden Ansprüche, wobei, wenn der zweite quasifeste Elektrolyt Fe²⁺ - und Fe³⁺ -Ionen enthält, er außerdem einen Komplexbildner für diese Ionen enthält, ausgewählt aus löslichen Citratsalzen, Weinsalzen, Salzen auf Ammoniumbasis, Oxalsalzen und Ethylendiamintetraessigsäure in einer Konzentration zwischen 0,001 M und 10 M.

13. Quasifeste Zn-Fe-Redox-Batterie nach einem der vorstehenden Ansprüche, wobei, wenn der zweite quasifeste Elektrolyt Fe²⁺ - und Fe³⁺ -Ionen enthält, er außerdem ein Stabilisierungsmittel für diese Ionen enthält, ausgewählt aus Ammoniumsalzen, Oxalaten, Acetaten, Tartraten, Ascorbinsäure, Ethylenglykol und Dimethylsulfoxyd (DMSO) in einem Bereich zwischen 0,001 M und 10 M.

14. Quasifeste Zn-Fe-Redox-Batterie nach einem der vorstehenden Ansprüche, wobei die quasifeste protonenleitende Membran außerdem eines oder mehrere von Folgendem enthält:
- organische und/oder anorganische Partikel, ausgewählt aus Partikeln auf Kohlenstoffbasis, polymeren Partikeln und keramischen Füllstoffpartikeln, mit einer durchschnittlichen Größe im Bereich von 10 nm bis 1000 µm und in einer Gesamtkonzentration im Bereich von 0,01 Gew.-% bis 20 Gew.-%, um die Ionenleitfähigkeit der Membran zu erhöhen;
- einen Weichmacherzusatz, ausgewählt aus Polyethylenglykol (PEG), Ethylenglykol, Diethylenglykol (DEG), Tetraethylenglykol (TEG), Propylenglykol (PG), Glycerin, Monosacchariden, Mannit, Sorbit, Xylit, Harnstoff, Fettsäuren, Ethanolamin, Triethanolamin, pflanzlichen Ölen, Lecithin, Wachsen, Aminosäuren und Tensiden in einem Bereich zwischen 0,1 Gew.-% und 5 Gew.-%; und
- ein chemisches Vernetzungsmittel, ausgewählt aus Glutaraldehyd, N,N'-Methylenbisacrylamid, Sulfophthalsäure, Sulfoessigsäure, Sulfobernsteinsäure, Chlorsulfonsäure und Borsäure;
- entweder eine Säure, ausgewählt aus Schwefelsäure, Phosphorsäure, Phosphonsäure, Salzsäure, Oxalsäure, Essigsäure, Sulfamatsäure, Ameisensäure, Perchlorsäure, Kohlensäure, Methansulfonsäure oder einer Kombination davon, in einer Konzentration von 0,1 M bis 2 M; oder eine Base, ausgewählt aus Kaliumhydroxid, Natriumhydroxid, Borhydroxid, Ammoniumhydroxid oder einer Kombination davon, in einer Konzentration von 0,1 M bis 10 M.

15. Quasifeste Zn-Fe-Redox-Batterie nach einem der vorstehenden Ansprüche, wobei die Stromsammler (104; 204; 304) aus einem Material bestehen, das aus Materialien auf Kohlenstoffbasis oder Metallen ausgewählt ist.

## Revendications

1. Batterie à oxydoréduction quasi-solide Zn-Fe (100 ; 200 ; 300 ; 400 ; 500 ; 600 ; 700 ; 800) comprenant :
- une première demi-pile (102 ; 202) comprenant : un premier électrolyte quasi-solide sélectionné parmi un premier électrolyte quasi-solide (106) dans lequel sont dissous des ions Zn²⁺ et un premier électrolyte quasi-solide (206) dans lequel sont dispersées des particules électroactives (210) organiques et/ou inorganiques contenant des ions zinc dans différents états d'oxydation ; un collecteur de courant (108 ; 208) ; et une électrode (104 ; 204, 210) disposée au sein de la première demi-pile ;
- une seconde demi-pile (112 ; 302) comprenant : un second électrolyte quasi-solide sélectionné parmi un second électrolyte quasi-solide (116) dans lequel sont dissous des ions Fe²⁺ et Fe³⁺ et un second électrolyte quasi-solide (306) dans lequel sont dispersées des particules électroactives (310) organiques et/ou inorganiques contenant des ions Fe²⁺ et Fe³⁺ ; un collecteur de courant (118 ; 318) ; et une électrode (114 ; 304, 310) disposée au sein de la seconde demi-pile ; et
- un séparateur (110 ; 510) entre les deux demi-piles,
dans lequel lesdits premier et second électrolytes quasi-solides sont, indépendamment l'un de l'autre, sous la forme d'un électrolyte polymère plastifié (PPE) ou d'un électrolyte polymère composite (CPE).

2. Batterie à oxydoréduction quasi-solide Zn-Fe selon la revendication 1, dans laquelle ledit premier électrolyte quasi-solide (106) est un électrolyte polymère plastifié (PPE) contenant des ions Zn²⁺ et est préparé par :
(i) le mélange :
(i.a) d'un solvant ;
(i.b) de poudres d'un ou de plusieurs matériau(x) polymère(s) dans une quantité comprise dans la plage de 0,1 % en poids à 50 % en poids, de préférence de 5 % en poids à 40 % en poids, encore plus préférentiellement de 5 % en poids à 30 % en poids par rapport au OSA; et
(i.c) d'un ou de plusieurs sel(s) de zinc soluble(s) dans le solvant, dans une quantité telle qu'elle permet d'avoir une concentration en ions Zn²⁺ entre 0,001 M et 10 M, de préférence de 0,1 M à 5 M, encore plus préférentiellement de 0,3 M à 2 M ;
ii) le chauffage du solvant jusqu'à une température supérieure à la température de transition vitreuse (T_{g}) du ou des polymère(s) employé(s) ; et,
iii) après dissolution du ou des polymère(s) et du ou des sel(s) de zinc, le fait de provoquer la gélification du mélange obtenu.

3. Batterie à oxydoréduction quasi-solide Zn-Fe selon la revendication 2, dans laquelle lesdits sels de zinc sont sélectionnés parmi le chlorure de zinc (ZnCl₂), le sulfate de zinc (ZnSO₄), le sulfamate de zinc (Zn(SO₃NH₂)₂), l'acétate de zinc (Zn(CH₃COO)₂), le carbonate de zinc (ZnCOs) et les mélanges de ceux-ci.

4. Batterie à oxydoréduction quasi-solide Zn-Fe selon la revendication 1, dans laquelle ledit premier électrolyte quasi-solide (206) est un électrolyte polymère composite (CPE) ayant des particules électroactives (210) contenant du zinc et est préparé par :
(iv) la dissolution de poudres d'un ou de plusieurs matériau(x) polymère(s), dans une quantité comprise dans la plage de 0,1 % en poids à 50 % en poids, dans un solvant chauffé jusqu'à une température supérieure à la température de transition vitreuse (T_{g}) du ou des polymère(s) employé(s) ;
(v) la dispersion, dans la solution ainsi obtenue, de particules électroactives organiques et/ou inorganiques contenant des ions zinc dans différents états d'oxydation, lesdites particules ayant une taille dans la plage de 10 nm à 1000 µm, et étant dans une quantité dans la plage de 0,01 % en poids à 50 % en poids ; et
vi) après dissolution du ou des polymère(s) et l'ajout des particules électroactives au zinc, le fait de provoquer la gélification du mélange obtenu.

5. Batterie à oxydoréduction quasi-solide Zn-Fe selon l'une quelconque des revendications précédentes, dans laquelle ledit second électrolyte quasi-solide (116) est un électrolyte polymère plastifié (PPE) contenant des ions Fe²⁺ et Fe³⁺ et est préparé par :
(vii) le mélange :
(vii.a) d'un solvant ;
(vii.b) de poudres d'un ou de plusieurs matériau(x) polymère(s) dans une quantité dans la plage de 0,1 % en poids à 50 % en poids, de préférence de 5 % en poids à 40 % en poids, plus préférentiellement de 5 % en poids à 30 % en poids par rapport au QSC ; et
(vii.c) un mélange d'un ou de plusieurs sels ferreux (Fe²⁺) et d'un ou de plusieurs sels ferriques (Fe³⁺) solubles dans le solvant, dans une quantité telle qu'elle permet d'obtenir une concentration en ions Fe²⁺ dans la plage de 0,001 M à 10 M et/ou une concentration en ions Fe³⁺ dans la plage de 0,01 M à 10 M ;
(viii) le chauffage du solvant jusqu'à une température supérieure à la température de transition vitreuse (T_{g}) du ou des polymère(s) employé(s) ; et,
(ix) après dissolution du ou des polymère(s) et du ou des sel(s) de fer, le fait de provoquer la gélification du mélange obtenu.

6. Batterie à oxydoréduction quasi-solide Zn-Fe selon la revendication 5, dans laquelle lesdits sels de fer sont sélectionnés parmi les chlorures de fer, les sulfates de fer, les sulfamates de fer, les acétates de fer, les nitrates de fer, les carbonates de fer et les mélanges de ceux-ci.

7. Batterie à oxydoréduction quasi-solide Zn-Fe selon l'une quelconque des revendications précédentes, dans laquelle ledit séparateur (110) est une membrane conductrice de protons quasi-solide préparée par :
(xiii) le mélange :
(xiii.a) d'un solvant ; et
(xiii.b) de poudres d'un ou de plusieurs matériau(x) polymère(s) dans une quantité dans la plage de 0,1 % en poids à 50 % en poids par rapport à la membrane échangeuse de protons quasi solide ;
(xiv) le chauffage du solvant jusqu'à une température supérieure à la température de transition vitreuse (T_{g}) du ou des polymère(s) employé(s) ; et,
(xv) après dissolution du ou des polymère(s), le fait de provoquer la gélification du mélange obtenu.

8. Batterie à oxydoréduction quasi-solide Zn-Fe selon l'une quelconque des revendications précédentes, dans laquelle le polymère utilisé dans la préparation des premier et second électrolytes quasi-solides et de la membrane conductrice de protons quasi-solide est sélectionné parmi le poly(alcool de vinyle) (PVA), la poly(N-vinylpyrrolidone) (PVP), le dextrane (Dex), la gélatine, l'amidon, l'hydroxyéthylamidon (HES), le poly(oxyde d'éthylène) (PEO), le chitosane, l'acide polyacrylique (PAA), la gélatine, la carboxyméthylcellulose (CMC), l'agar-agar, le poly(méthacrylate de méthyle) (PMMA), la lignine, l'alginate de sodium, le poly(fluorure de vinylidène-co-hexafluoropropylène) (P(VdF-co-HFP)) et les mélanges de ceux-ci.

9. Batterie à oxydoréduction quasi-solide Zn-Fe selon l'une quelconque des revendications précédentes, dans laquelle l'un ou l'autre ou les deux desdits premier et second électrolytes quasi-solides possèdent un pH allant d'environ 0,1 à environ 6, obtenu par l'ajout d'un acide sélectionné parmi l'acide sulfurique, l'acide phosphorique, l'acide phosphoreux, l'acide chlorhydrique, l'acide oxalique, l'acide acétique, l'acide sulfamate, l'acide formique, l'acide perchlorique, l'acide carbonique, l'acide méthanesulfonique, ou une combinaison de ceux-ci, dans une concentration allant de 0,1 M à 2 M.

10. Batterie à oxydoréduction quasi-solide Zn-Fe selon l'une quelconque des revendications précédentes, dans laquelle l'un ou l'autre ou les deux desdits premier et second électrolytes quasi-solides possèdent un pH allant d'environ 6 à environ 14, obtenu par l'ajout d'une base sélectionnée parmi l'hydroxyde de potassium, l'hydroxyde de sodium, l'hydroxyde de bore, l'hydroxyde d'ammonium ou une combinaison de ceux-ci, dans une concentration allant de 0,1 M à 10 M.

11. Batterie à oxydoréduction quasi-solide Zn-Fe selon l'une quelconque des revendications précédentes, dans laquelle l'un ou l'autre ou les deux desdits premier et second électrolytes quasi-solides contiennent un ou plusieurs additifs sélectionnés parmi un suppresseur de dégagement d'hydrogène, un agent tampon de pH, un agent de nivellement, un sel métallique sélectionné parmi AlCl₃, Al₂(SO₄)₃, MgCl₂, MgSO₄, NaCl, Na₂SO₄, LiCI, Li₂SO₄, KCI, NH₄Cl, les sels de Rochelle ou les combinaisons de ceux-ci pour favoriser la conductivité d'électrolyte quasi solide, les émulsifiants, les charges, les plastifiants, et les particules organiques et/ou inorganiques sélectionnées parmi les particules à base de carbone, les particules polymères et les particules de charge céramique pour augmenter le rapport amorphe sur cristallin dans lesdits électrolytes quasi-solides.

12. Batterie à oxydoréduction quasi-solide Zn-Fe selon l'une quelconque des revendications précédentes dans laquelle, lorsque ledit second électrolyte quasi-solide contient des ions Fe²⁺ et Fe³⁺, il contient en outre un agent complexant pour lesdits ions sélectionné parmi les sels de citrate solubles, les sels tartriques, les sels à base d'ammonium, les sels oxaliques et l'EDTA, à une concentration entre 0,001 M et 10 M.

13. Batterie à oxydoréduction quasi-solide Zn-Fe selon l'une quelconque des revendications précédentes dans laquelle, lorsque ledit second électrolyte quasi-solide contient des ions Fe²⁺ et Fe³⁺, il contient en outre un agent stabilisant desdits ions sélectionné parmi les sels d'ammonium, les oxalates, les acétates, les tartrates, l'acide ascorbique, l'éthylène glycol et le diméthylsulfoxyde (DMSO), dans une plage entre 0,001 M et 10 M.

14. Batterie à oxydoréduction quasi-solide Zn-Fe selon l'une quelconque des revendications précédentes, dans laquelle ladite membrane conductrice de protons quasi-solide contient en outre l'un ou plusieurs parmi :
- des particules organiques et/ou inorganiques sélectionnées parmi les particules à base de carbone, les particules polymères et les particules de charge céramique, ayant une taille moyenne dans la plage de 10 nm à 1000 µm et dans une concentration globale dans la plage de 0,01 % en poids à 20 % en poids, afin d'augmenter la conductivité ionique de la membrane ;
- un additif plastifiant sélectionné parmi le polyéthylène glycol (PEG), l'éthylène glycol, le diéthylène glycol (DEG), le tétraéthylène glycol (TEG), le propylène glycol (PG), le glycérol, les monosaccharides, le mannitol, le sorbitol, le xylitol, l'urée, les acides gras, l'éthanolamine, la triéthanolamine, les huiles végétales, la lécithine, les cires, les acides aminés et les tensioactifs dans une plage entre 0,1 % en poids et 5 % en poids ; et
- un agent de réticulation chimique sélectionné parmi le glutaraldéhyde, le N,N'-méthylène bisacrylamide, l'acide sulfophtalique, l'acide sulfoacétique, l'acide sulfosuccinique, l'acide chlorosulfonique et l'acide borique ;
- soit un acide sélectionné parmi l'acide sulfurique, l'acide phosphorique, l'acide phosphoreux, l'acide chlorhydrique, l'acide oxalique, l'acide acétique, l'acide sulfamate, l'acide formique, l'acide perchlorique, l'acide carbonique, l'acide méthanesulfonique ou une combinaison de ceux-ci, dans une concentration allant de 0,1 M à 2 M ; soit une base sélectionnée parmi l'hydroxyde de potassium, l'hydroxyde de sodium, l'hydroxyde de bore, l'hydroxyde d'ammonium ou une combinaison de ceux-ci, dans une concentration allant de 0,1 M à 10 M.

15. Batterie à oxydoréduction quasi-solide Zn-Fe selon l'une quelconque des revendications précédentes, dans laquelle lesdits collecteurs de courant (104 ; 204 ; 304) sont constitués d'un matériau sélectionné entre les matériaux à base de carbone ou les métaux.
